# EUROPEAN PATENT SPECIFICATION

(11) **EP 0 763 581 B1**
(45) Date of publication and mention of the grant of the patent: **05.12.2001**
(21) Application number: 96306722.8
(22) Date of filing: 16.09.1996
(51) Int. Cl.: C09D 129/14, C09D 131/04, G02B 1/10

(54) **Primer composition and optical material**
Grundierungszusammensetzung und optischer Gegenstand
Composition pour couche de fond et matériau optique

(30) Priority: 18.09.1995 JP 23868895; 18.09.1995 JP 23868995; 27.10.1995 JP 28041095; 27.10.1995 JP 28041195
(43) Date of publication of application: 19.03.1997
(73) Proprietor: NIKON CORPORATION, Tokyo (JP); Nasu Nikon Co., Ltd., Nasu-gun, Tochigi-ken (JP)
(72) Inventor: Abe, Osamu, Tokyo (JP); Shimizu, Sumito, Tokyo (JP); Seki, Michiko, Tokyo (JP); Shuin, Toshiya, c/o Nasu Nikon Co., Ltd., Nasu-gun, Tochigi-ken (JP); Ogasawara, Hisashi, c/o Nasu Nikon Co., Ltd., Nasu-gun, Tochigi-ken (JP)
(74) Representative: West, Alan Harry

(56) References cited:
- EP-A- 0 699 926

## Description

This invention relates to a primer composition. The primer composition of this invention, when applied as a coating to a plastic optical part such as a plastic lens and heat-treated at a relatively low temperature for a short length of time, cures and forms a film with excellent smoothness. It permits production of plastic optical parts excelling in shock resistance, heat resistance, proofness against friction, chemical resistance, weatherability, and appearance and, moreover, enjoys a long storage life.

In recent years, the plastic lens, owing to such features as light weight, resistance to shock, ready formability, and dyeability, has been rapidly disseminating in the field of optical materials, particularly eyeglasses. The plastic lens, however, is generally at a disadvantage in very readily sustaining injury. Usually for the purpose of improving the plastic lens in surface hardness, the practice of providing the plastic lens on the surface thereof with a silicon type hard coat is prevailing. Then, a great value is added to the plastic lens by forming on the surface of the hard coat film an antireflection film by the vacuum deposition of an inorganic substance for the purpose of preventing the plastic lens from producing surface reflection, a cause of the flicker of an image on the part of eyesight (subdued contrast by flare or ghost aiming to degrade the reflectance of light and exalt the light transmittance).

The plastic lens which is provided with both the hard coat film and the antireflection film, however, is at a disadvantage in suffering a marked loss of the resistance to shock because the softness, namely the shock-absorbing property, of the lens is sharply lowered as compared with the plastic lens provided with no film at all or the plastic lens provided with only a hard coat film. In the U.S., the medical instruments including eyeglasses and the medicines are subject to relevant safety standards and the eyeglass lenses which are instruments for correcting visual power are subject to the Food and Drug Administration (hereinafter referred to briefly as "FDA") standard. According to the FDA standard, a given plastic lens is required to avoid being shattered when an iron ball, 5/8 inch (16.3 mm) in diameter and 0.56 ounce (15.9 g) in weight, is dropped from a height of 50 inches (127 cm) thereon. While most plus lenses pass the FDA standard because they are amply thick at the center, some, if not all, minus lenses fail to pass the FDA standard because they are thin at the center. Recently the minus lenses have been tending toward gradually losing thickness in the central part by reason of appearance to the extent of posing a problem of deficiency in shock resistance.

Regarding the plastic lenses which have undergone the surface treatments for a hard coat and an antireflection coat, several methods have been already proposed for enabling these plastic lenses to pass the test of shock resistance specified by the FDA standard. The first method consists in improving the minus lenses in shock resistance by giving them increased center thicknesses.

This method, however, is unfavorable in terms of practical use because it gives the minus lenses increased edge thicknesses and consequently add to their weights besides impairing their appearance. Depending on the kind of material to be used, however, some of the plastic minus lenses which have been given increased center thicknesses fail to pass the FDA standard.

The second method consists in imparting to materials for the plastic lenses such impact strength as enables the plastic lenses to pass the test of shock resistance specified by the FDA standard in spite of a possible decline of the impact resistance due to the provision of both the hard coat film and the antireflection film. The proposals of this method are disclosed in Japanese Patent Application Laid-Open No. 61-170701, Japanese Patent Application Laid-Open No. 1-244401, Japanese Patent Application Laid-Open No. 2-36216, Japanese-Patent Application Laid-Open No. 4-159309, Japanese Patent Application Laid-Open No. 4-161412, Japanese Patent Application Laid-Open No. 4-126710, Japanese Patent Application Laid-Open No. 5-5011, Japanese Patent Application Laid-Open No. 4-142315, Japanese Patent Application Laid-Open No. 4-161410, Japanese Patent Application Laid-Open No. 4-161411, Japanese Patent Application Laid-Open No. 4-202308, and Japanese Patent Application Laid-Open No. 4-202309, for example.

The plastic lenses embodying these proposals are invariably in a state provided with neither of the hard coat film and the antireflection film when they pass the FDA standard. They have the smallest center thicknesses of 1.5 mm or 2 mm, a size still large for a minus lens. None of the materials which have been heretofore proposed for the plastic lenses is capable of imparting to the plastic lenses shock resistance sufficient for practical use.

The third method consists in interposing between the plastic lens substrate and the hard coat layer a primer layer formed of a resinous composition.

The primer layer by nature has been proposed as one means for improving the fastness of adhesion between the plastic lens substrate and the hard coat film. It aims mainly to improve the tightness of adhesion similarly to such measures for surface modification as saponification and plasma treatment. The advanced techniques on the primer layer proposed for this purpose include a method which uses an epoxy compound (Japanese Patent Application Laid-Open No. 60-214301), a method which uses an acrylic and/or methacrylic compound and an aromatic vinyl compound (Japanese Patent Application Laid-Open No. 60-214302), and a method which uses a primer composition comprising an acryl polyol and a polyfunctional organic isocyanate compound (Japanese Patent Application Laid-Open No. 61-114203), for example. These methods invariably accomplish the improvement in the fastness of adhesion and attain the impartation of such characteristics as chemical resistance and nevertheless fail to improve the shock resistance.

Methods which use polyurethane resin for the primer layer aimed at improving the shock resistance have been proposed. The methods disclosed in Japanese Patent Application Laid-Open No. 63-14001 and Japanese Patent Application Laid-Open No. 63-87223 consist in obtaining a polyurethane resin layer by applying a polyurethane resin solution to a plastic lens and then causing the solvent to volatilize from the applied layer of the solution. The polyurethane layer consequently obtained is a film of a so-called thermoplastic resin which has no cross-linked structure. When the plastic lens provided with this polyurethane layer is immersed in a hard coat solution for the deposition of a hard coat film thereon, the polyurethane in the primer layer is dissolved in the solvent of the hard coat solution, released into the hard coat solution, and often suffered to pollute the hard coat solution. Further, the primer layer is often corroded by the solvent and consequently deprived of transparency and suffered to opacify. Japanese Patent Application Laid-Open No. 61-114203 discloses a method which comprises applying a primer composition comprising an acryl polyol and a polyfunctional organic isocyanate compound, allowing the applied layer of the primer composition to cure, and forming a polyurethane layer possessing a cross-linked structure. Since this method uses an isocyanate compound capable of reacting with active hydrogen at normal room temperature, it entails the disadvantage that the primer solution does not have a very long storage life because the reaction of the hydroxyl group of the polyol with the isocyanate group proceeds even during the storage of the primer solution.

Japanese Patent Application Laid-Open No. 3-109502, Japanese Patent Application Laid-Open No. 4-366801, and Japanese Patent Application Laid-Open No. 5-25299 disclose a method for improving the storage life of the primer solution by using a block type isocyanate thereby curbing the reaction of isocyanate with the polyol at low temperatures. For the purpose of first applying the primer solution to a lens and then curing the applied layer of the primer solution, however, the primer solution must be preparatorily divested of the blocking agent. The removal of the blocking agent necessitates a high temperature exceeding 120°C. This method, therefore, is handicapped by the fact that it cannot be effectively applied to a plastic substrate having no very high softening temperature. It also has the problem of notably varying the color tone of a plastic lens which has been dyed with an organic dye.

This invention, conceived in due recognition of the problems of the prior art mentioned above, has an object of providing a primer composition which enjoys a long storage life and, when heat-treated at a relatively low temperature for a short length of time, cures and gives rise to a film excelling in fastness of adhesion and smoothness, manifests an effect of notably improving the impact strength of plastic optical parts, causes virtually no change of the color tone of dyed optical parts, and incurs substantially no exudation from the primer layer during the formation of a hard coat film.

According to the present invention, there is provided a primer composition, which has as essential active components thereof;
(A) a polyvinyl acetal represented by the formula (I) 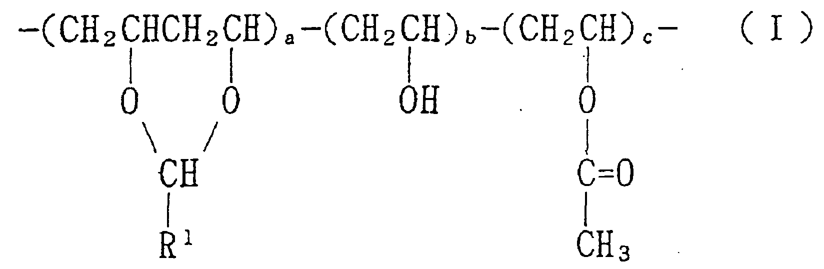 (wherein R¹ represents a hydrogen atom or an alkyl group of 1 - 20 carbon atoms, a the composition of repeating units having an acetal group (fraction of component units) in the range of 10 - 90, b the composition of repeating units having an OH group (fraction of component units) in the range of 10 - 90, c the composition of repeating units having an acetyl group (fraction of component units) in the range of 0 - 10, and a + b + c = 100);
(B) at least one cross-linking agent selected from the group consisting of hydrolyzable organosilane compounds represented by the formula (II)

   R² _{d}R³ ₑ-Si-X¹ _{4-(d+e)} (II)

   (wherein R² and R³ independently represent a substituted or unsubstituted hydrocarbon group of 1 - 8 carbon atoms, X¹ represents a hydrolyzing group, and d and e independently represent an integer of 0 to 3) or the hydrolysate thereof and hydrolyzable organosilane compounds represented by the formula (III)

   X² _{(3-f)}R⁵ _{f}-si-R⁴-Si-R⁶ _{g}X² _{(3-g)} (III)

   (wherein R⁴ represents an organic group of 2 - 8 carbon atoms, R⁵ and R⁶ independently represent a substituted or unsubstituted hydrocarbon group of 1 - 8 carbon atoms, X² represents a hydrolyzing group, and f and g independently represent an integer of 0 to 2) or the hydrolysates thereof;
(C) at least one compound selected from the organometallic alkoxide compounds represented by the formula (IV) 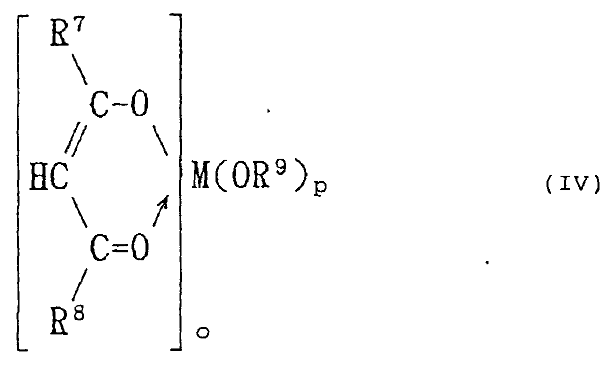 (wherein R⁷ represents an alkyl group or alkoxy group of 1 - 4 carbon atoms, R⁸ and R⁹ independently represent an alkyl group of 1 - 4 carbon atoms, M represents Al or Ti, o represents an integer of 0 to 2, p represents an integer of 1 to 4, and o + p represents the valency of M which is 3 or 4); and
(D) minute inorganic particles and has the content of polyvinyl acetal as the component (A) in the range of 0.1 - 20% by weight, the content of cross-linking agent as the component (B) in the range of 0.01 - 10% by weight, the content of organometallic alkoxide compound as the component (C) in the range of 0.01 - 10% by weight, and the content of minute inorganic particles as the component (D) in the range of 0 - 30% by weight. This primer composition has such very useful features as enjoying a long storage life and, when heat-treated at a relatively low temperature for a short length of time, curing and giving rise to a film excelling in fastness of adhesion and smoothness, manifesting an effect of notably improving the impact strength of plastic optical parts, causing virtually no change of the color tone of dyed optical parts, and incurring substantially no exudation from the primer layer during the formation of a hard coat film.

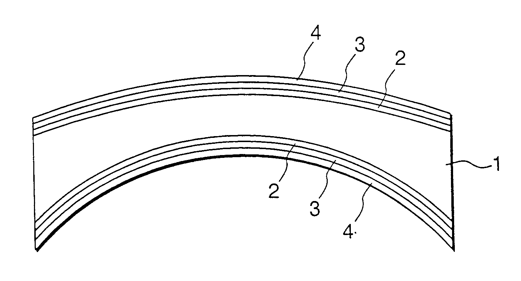

The drawing schematically represents an example of a plastic lens which is possessed of a primer layer.

The polyvinyl acetal represented by the formula (I) and used as the main component of the primer composition of this invention appropriately has the acetal moiety thereof contain an alkyl group of 0 to 20, preferably 0 to 10, carbon atoms. The polyvinyl acetal is particularly preferably a polyvinyl butyral which has an alkyl group of three carbon atoms. Appropriately, the degree of acetalization of the polyvinyl acetal is in the range of 10 to 90%, preferably 20 to 80%.

If the degree of acetalization is less than 10%, the polyvinyl acetal will not fully improve the impact strength. If it exceeds 90%, the polyacetal will not be easily synthesized and, when synthesized at all, the polyacetal will possibly lower the fastness of adhesion to a plastic substrate.

Advantageously, the polymerization degree of the polyvinyl acetal is not more than 5,000, preferably in the range of 100 to 3,000. If the polymerization degree is unduly high, the polyvinyl acetal will not be easily solved in a solvent and will not be easily synthesized with the optimal degree of acetalization. Conversely, if the degree of polymerization is unduly low, then the polyvinyl acetal will not fully improve the impact strength.

Incidentally, the acetyl group in the polyvinyl acetal of the formula (I) is not an essential component for this invention. Since the polyvinyl alcohol as the raw material for the polyvinyl acetal is synthesized by the hydrolysis of polyvinyl acetate, the acetyl group inevitably remains in a small amount in the produced hydrolysate.

Appropriately, the amount of the polyvinyl acetal to be added to the primer composition is in the range of 0.1 - 20% by weight, preferably 1 - 10% by weight. If the amount of the polyvinyl acetal to be added is unduly large, the primer composition will acquire unduly high viscosity and incur difficulty in being applied to a plastic optical part and the applied layer of the primer composition will be unduly thick and will be deprived of uniformity of surface. Conversely, if the amount is unduly small, the applied layer of the primer composition will be too thin to permit full improvement of the impact strength.

As the cross-linking agent, an organosilane compound of the formula (II) or the formula (III). The hydrolyzing group in the organosilane compound undergoes hydrolysis and forms a silanol group, which reacts with an organometallic alkoxide compound of the formula (IV). The product of this reaction, owing to the action of the catalyst and heat, undergoes a dehydration-condensation reaction with the hydroxyl group in the polyvinyl acetal and induces cross-linkage between or within molecules. The molecule that takes part in this cross-linkage is the hydrolysate of the organosilane compound or the condensate thereof. The organosilane compound may be added in its unmodified form or after undergoing preparatory hydrolysis. One organosilane compound may be used or a mixture of two or more organosilane compounds may be used.

The organosilane compounds which are effectively used in the present invention include halosilane compounds having a halogen atom as a hydrolyzing group, alkoxysilane compounds having an alkoxy group as a hydrolyzing group, carboxysilane compounds having a carboxyl group as a hydrolyzing group, and ketooxime silane compounds having a ketooxime group as a hydrolyzing group. Among other organosilane compounds enumerated above, alkoxysilane compounds prove particularly advantageous.

As concrete examples of the hydrolyzable organosilane compound represented by the formula (II), dimethyl dimethoxysilane, dimethyl diethoxysilane, diethyl dimethoxysilane, diethyl diethoxysilane, phenylmethyl dimethoxysilane, phenylmethyl diethoxysilane, γ-chloropropylmethyl dimethoxysilane, γ-chloropropylmethyl diethoxysilane, γ-methacryloxypropylmethyl diethoxysilane, γ-mercaptopropylmethyl dimethoxysilane, γ-mercaptopropylmethyl diethoxysilane, γ-aminopropylmethyl dimethoxysilane, γ-aminopropylmethyl diethoxysilane, methylvinyl dimethoxysilane, methylvinyl diethoxysilane, γ-glycidoxypropylmethyl dimethoxysilane, γ-glycidoxypropylmethyl diethoxysilane, methyl trimethoxysilane, methyl triethoxysilane, methyl tripropoxysilane, methyl tributoxysilane, methyl tris(2-methoxyethoxy)silane, ethyl trimethoxysilane, ethyl triethoxysilane, ethyl tripropoxysilane, ethyl tributoxysilane, ethyl tris(2-methoxyethoxy)silane, propyl trimethoxysilane, propyl triethoxysilane, butyl trimethoxysilane, butyl triethoxysilane, hexyl trimethoxysilane, hexyl triethoxysilane, vinyl trimethoxysilane, vinyl triethoxysilane, vinyl tris(2-methoxyethoxy)silane, phenyl trimethoxysilane, phenyl triethoxysilane, γ-chloropropyl methoxysilane, γ-chloropropyl trimethoxysilane, γ-chloropropyl triethoxysilane, 3,3,3-trifluoropropyl trimethoxysilane, 3,3,3-trifluoropropyl triethoxysilane, γ-methacryloxypropyl trimethoxysilane, γ-methacryloxypropyl trimethoxysilane, γ-methacryloxypropyl triethoxysilane, γ-aminopropyl trimethoxysilane, γ-aminopropyl trimethoxysilane, γ-mercaptopropyl trimethoxysilane, γ-mercaptopropyl triethoxysilane, chloromethyl trimethoxysilane, chloromethyl triethoxysilane, N-β-aminoethyl-γ-aminopropyl trimethoxysilane, N-β-aminoethyl-γ-aminopropyl triethoxysilane, γ-glycidoxypropyl trimethoxysilane, γ-glycidoxypropyl triethoxysilane, (3,4-epoxycyclohexylmethyl) trimethoxysilane, (3,4-epoxycyclohexylmethyl) triethoxysilane, β-(3,4-epoxycyclohexylethyl) trimethoxysilane, β-(3,4-epoxycyclohexylethyl) triethoxysilane, tetramethoxysilane, tetraethoxysilane, tetrapropxysilane, and tetrabutoxysilane may be cited.

As concrete examples of the hydrolyzable organosilane compound represented by the formula (III), 1,1-bis-(trimethoxysilyl) ethane, 1,1-bis(triethoxysilyl) ethane, 1,2-bis-(trimethoxysilyl) ethane, 1,2-bis(triethoxysilyl) ethane, 1,3-bis(trimethoxysilyl) propane, 1,3-bis(triethoxysilyl) propane, 2,2-bis(trimethoxysilyl) propane, and 2,2-bis(triethoxysilyl) propane may be cited.

Appropriately, the amount of the organosilane compound to be added to the primer composition is in the range of 0.01 - 10% by weight, preferably 0.1 - 5% by weight.

As the organometallic alkoxy compound of the formula (IV), an alkoxide or alkoxidediketonate compound of aluminum or titanium is used.

These compounds may be used either singly or in the form of a mixture of two or more members. The organometallic alkoxide compound readily reacts with an organosilane compound or a hydrolyzed condensate thereof and the product of this reaction is caused to react with the hydroxyl group in the polyvinyl acetal through the medium of the catalyst and heat. The organometallic alkoxide compound is thought to function as a catalyst for promoting the dehydration-condensation reaction of the silanol group in the organosilane compound resulting from the hydrolysis with the hydroxyl group in the polyvinyl acetal and also function as a cross-linking agent for the hydrolysis-condensation reaction with the organosilane compound.

As concrete examples of the organometallic alkoxide compound represented by the formula (IV), aluminum trimethoxide, aluminum triethoxide, aluminum tripropoxide, aluminum tributoxide, titanium tetramethoxide, titanium tetraethoxide, titanium tetrapropoxide, titanium tetrabutoxide, aluminum dipropoxide acetyl acetonate, aluminum dipropoxide ethyl acetatoacetate, aluminum dibutoxide acetyl acetonate, aluminum dibutoxide ethyl acetoacetate, titanium dimethoxide bis(acetyl acetonate), titanium diethoxy bis(acetyl acetonate), titanium dipropoxide bis(acetyl acetonate), titanium dibutoxide bis(acetyl acetonate), titanium dipropoxide bis(ethyl acetoacetate), and titanium dibutoxide bis(ethyl acetoacetate) may be cited. Among other organometallic alkoxide compounds enumerated above, titanium alkoxide proves particularly advantageous.

The amount of the organometallic alkoxide compound to be added to the primer composition is appropriately in the range of 0.01 - 10% by weight, preferably in the range of 0.1 - 3% by weight. Advantageously, this amount is not more than 50 mol% based on the amount of the organosilane compound.

If the amount of the organometallic alkoxide compound exceeds 50 mol% of the amount of the organosilane compound added, the primer composition will suffer a decline of the impact resistance.

The minute inorganic particles are minute particles of at least one inorganic oxide selected from among Al₂O₃, TiO₂, ZrO₂, Fe₂O₃, Sb₂O₅, BeO, ZnO, SnO₂, CeO₂, SiO₂, and WO₃ or a composite of such inorganic oxides; minute particles of a compound oxide selected from among BaTiO₃, SrTiO₃, BaZrO₃, CoFe₂O₄, NiFe₂O₄, and MnFe₂O₄; or minute particles of a compound oxide solid solution selected from among (Ba,Sr)TiO₃, Sr(Ti,Zr)O₃, and (Mn,Zn)Fe₂O₄, for example. The minute inorganic particles enumerated above may be used either singly or in the form of a mixture of two or more members. As the minute particles of oxide, the relevant sols dispersed in water or an organic solvent which are commercially available may be used in their unmodified form. The minute particles of compound oxide or minute particles of compound oxide solid solution can be easily prepared by subjecting corresponding metal alkoxide compound to the sol-gel method. The average particle diameter of the minute inorganic particles is in the range of 1 - 300 nm, preferably in the range of 1 - 50 nm. If the average particle diameter exceeds 300 nm, the lens will be clouded by random scattering of light.

The amount of the minute inorganic particles to be added to the primer composition is generally in the range of 0.1 - 30% by weight as solids concentration. The primer composition, when necessary, may omit the addition of minute inorganic particles. In any event, the kind and the amount of addition of the minute inorganic particles are adjusted so that the refractive index of the cured film of the primer may coincide with or approximate extremely closely to that of the plastic lens. Particularly, in the case of a plastic lens substrate having a high refractive index of not less than 1.60, it is appropriate to add the minute inorganic particles in an amount in the range of 1 - 5 parts by weight, based on 1 part by weight of the polyvinyl acetal.

The curing catalyst is not particularly limited. It is only required to be capable of promoting the dehydration condensation of an organosilane compound, the hydrolyzed condensate of an organometallic alkoxide compound, and the hydroxyl group in polyvinyl acetal and the dehydration condensation reaction between silanol groups. As concrete examples of the curing catalyst, organotin compounds such as dibutyl tin dilaurate, dibutyl tin dioctate, and dibutyl tin diacetate, organic amines such as propyl amine, butyl amine, dipropyl amine, dibutyl amine, triethanol amine, tetramethyl guanidine, methyl imidazole, and dicyan diamide, and organometallic complexes such as aluminum acetyl acetate and iron acetyl acetonate may be cited. Among other curing catalysts enumerated above, organotin compounds prove particularly advantageous. These curing catalysts may be used either singly or in the form of a mixture of two or more members.

The amount of the curing catalyst to be added to the primer composition is in the range of 0.002 - 10% by weight, preferably in the range of 0.005 - 1% by weight.

The organic solvent in the primer composition may be any of the known organic solvents such as, for example, hydrocarbons, halogenated hydrocarbons, alcohols, ketones, esters, and ethers. The organic solvent is only required to be capable of thoroughly dissolving polyvinyl acetal and, at the same time, thoroughly dispersing the minute inorganic particles. Concrete examples of the organic solvent which is particularly effectively used, methanol, ethanol, propanol, butanol, hexanol, methyl cellosolve, and ethyl cellosolve. These organic solvents may be used either singly or in the form of a mixture of two or more members.

The water in the primer composition is an essential component for the hydrolysis of the organosilane compound. The amount of water to be added is in the range of 0.1 - 20% by weight. If the amount of water so added is unduly large, the applied layer of the primer will be deprived of smoothness. Conversely, if this amount is unduly small, the storage life of the primer solution will be unduly short.

The primer composition of this invention permits incorporation therein of known additives such as leveling agents intended for improving the coating property, ultraviolet absorbents and antioxidants intended to improve the weatherability, dyes, pigments, photochromic dyes, and photochromic pigments, and other additives intended for enhancing the film quality and imparting additional functions to the film.

The method for applying the primer composition of this invention to the plastic optical part is not particularly limited. It may be any of the known methods such as, for example, the spin coat method and the dipping method. The surface of the plastic optical part to be coated by the primer composition, when necessary, may be subjected to a pretreatment such as, for example, an alkali treatment, a plasma treatment, or an ultraviolet treatment.

The plastic optical part is not particularly discriminated on account of the kind of the material thereof or the method of formation of the optical part.

The primer coat film which has been formed on the surface of the plastic optical part is cured by heating the film at a temperature in the range of 50 - 120°C, preferably in the range of 70 - 110°C, for a period in the range of 1 - 60 minutes. By this heat treatment, the hydrolyzed organosilane compound in the primer composition, the hydrolyzed condensate of the organotitanate compound, and the hydroxyl group contained in the polyvinyl acetal undergo dehydration condensation to effect cross-linkage of the polyvinyl acetal molecules and, at the same time, the water formed by the condensation reaction and the organic solvent and water contained preparatorily in the primer composition are vaporized. Thus, on the surface of the plastic optical particle is deposited the primer layer which is formed of three-dimensionally cross-linked polyvinyl acetal.

Appropriately, the thickness of the primer layer after being thermally cured is in the range of 0.1 - 5 µm, preferably in the range of 0.2 - 3 µm. If the thickness of the primer layer is less than 0.1 µm, the impact resistance will not be amply improved. Conversely, if the thickness exceeds 5 µm, the heat resistance and the surface accuracy will be unduly low while the impact resistance may be infallibly improved.

The plastic optical part such as, for example, the plastic lens which has been provided with the cured primer film is allowed to have a hard coat formed thereon by a known method for the purpose of improving the surface hardness thereof. The hard coat film can be formed by any of the known methods such as, for example, the wet method which comprises applying the hard coat solution containing the hydrolysate of an organoalkoxysilane, minute inorganic oxide particles, and a metal complex catalyst by the dipping or spin coating technique to the plastic lens and subsequently thermally curing the applied layer of the hard coat solution and the dry methods such as the plasma CVD.

As concrete examples of the organoalkoxysilane to be used in the wet method mentioned above, γ-glycidoxypropyl trimethoxysilane, γ-glycidoxypropyl triethoxysilane, γ-glycidoxypropylmethyl diethoxysilane, methyl trimethoxysilane, methyl triethoxysilane, and 1, 2-bis(trimethoxysilyl) ethane may be cited. The hydrolysate of such an alkoxysilane is prepared by hydrolyzing one member or a mixture of two or more members selected from the group of organoalkoxysilane compounds enumerated above with an acidic aqueous solution such as of hydrochloric acid, for example.

As the minute inorganic oxide particles, the sol of minute inorganic oxide particles dispersed in water or an organic solvent which is commercially available is used. As concrete examples of the minute particles of inorganic oxide for the sol, the sols of minute particles of such inorganic oxides as ZnO, SiO₂, Al₂O₃, TiO₂, ZrO₂, SnO₂, BeO, Fe₂O₃, Sb₂O₅, WO₃, CeO₂, and minute particles of complexes of such inorganic oxides may be cited.

The minute particles of such compound oxides as BaTiO₃, SrTiO₃, BaZrO₃, CoFe₂O₄, NiFe₂O₄, and MnFe₂O₄ and the minute particles of such compound oxide solid solutions as (Ba,Sr)TiO₃, Sr(Ti,Zr)O₃, and (Mn,Zn)Fe₂O₄ are also usable. The minute inorganic particles may be used either singly or in the form of a mixture of two or more members.

The metal complex catalysts which are usable herein include metal salts of acetyl acetone and metal salts of ethylene diamine tetraacetic acid, for example.

The hard coat solution is prepared, when necessary, with a surfactant, a coloring agent, or a solvent incorporated additionally therein.

The thickness of the hard coat layer is not less than 1 µm, preferably in the range of 2 - 3 µm.

Further, on the surface which is provided with the hard coat, the film of an inorganic compound capable of preventing reflection of light can be vacuum deposited by the known method. For the antireflection film, the single-layer structure or the multilayer structure can be adopted, depending on the optical theory. For the formation of the antireflection film, generally such techniques as the vacuum deposition, sputtering, ion plating, and CVD are available. As concrete examples of the material for the antireflection film, such inorganic dielectrics as SiO, SiO₂, Al₂O₃, Y₂O₃, Yb₂O₃, CeO₂, ZrO₂, Ta₂O₃, TiO₂, and MgF₂ may cited.

For the purpose of preventing the antireflection film from smearing and swelling with water, an extremely thin film of either an organosilicon compound containing in the side chain such a hydrophobic group as alkyl group, phenyl group, or polyfluoroalkyl group or a fluorine-containing hydrocarbon compound may be formed optionally on the antireflection film.

The reason for the conspicuous improvement which the plastic optical part provided with the cured film of the primer composition of this invention attains in its impact resistance is not necessarily clear. This improvement may be explained fairly well as follows. The cured film of the primer composition of this invention combines a high modulus of elasticity with high flexibility and, therefore, is thought to discharge the part of absorbing the energy of an impact of some sort or other exerted on the plastic optical part.

Then, since the cured film of the primer composition of this invention is cross-linked three-dimensionally, the possibility of the polyvinyl acetal and other substances dissolving in and polluting the hard coat solution during the deposition of a hard coat by the wet technique is nil. Further, since the polyvinyl acetal which is the main component of the primer composition of this invention adequately possesses hydroxyl groups, it is thought to permit the three-dimensional cross-linkage and, at the same time, establish fast adhesion between the primer layer and the plastic optical part and between the primer layer and the hard coat film.

### EXAMPLES

Now, this invention will be described more specifically below with reference to working examples. It should be noted, however, that this invention is not limited to and by these examples.

### [A] Preparation of primer composition containing minute inorganic particles

### (1) Preparation of primer composition (A-1)

In a reaction vessel provided with a rotor, 2.2 parts by weight of methyl trimethoxysilane and 19.8 parts by weight of methanol were placed and 0.9 part by weight of 0.001N hydrochloric acid was added thereto and they were collectively stirred for one hour to effect hydrolysis.

The resultant hydrolysate and a solution of 2.2 parts by weight of titanium tetra-n-butoxide in 19.8 parts by weight of n-propanol added thereto were stirred for 30 minutes to obtain an organoalkoxysilane/organotitanate hydrolyzed condensate.

To the resultant hydrolyzed condensate solution, 133.3 parts by weight of a methanol sol having minute SnO₂/WO₃ complex particles dispersed therein and exhibiting an average particle diameter of 25 nm and a solids concentration of 30% (produced by Nissan Chemicals Industries, Ltd. and marketed under product code of "HIS-30M"), 2.0 parts by weight of dibutyl tin dilaurate as a curing catalyst, and 1.3 parts by weight of a fluorine type surfactant (produced by Sumitomo 3M K.K. and marketed under trademark designation of "Florad FC430") as a leveling agent were sequentially added. The resultant mixture and a solution of 40 parts by weight of polyvinyl butyral resin having an average polymerization degree of 800 and a degree of butyralization of 68% (produced by Sekisui Chemical Co., Ltd. and marketed under trademark designation of "S-LEC BM-2") in 360 parts by weight of methanol, 70.2 parts by weight of methanol, 328.3 parts by weight of n-propanol, and 20 parts by weight of purified water added thereto were collectively stirred for one hour. Then, the produced mixture was passed through a membrane filter, 3 µm in mesh, to produce a primer composition.

### (2) Preparation of primer compositions (A-2) - (A-20)

Primer compositions were prepared by following the procedure of the primer composition (A-1) while using the formations shown in Table 1 instead. The sols having minute inorganic oxide particles dispersed therein, polyvinyl butyral resins, and surfactants used in the formulations are shown below.

### a) Sol having minute inorganic oxide particles dispersed therein

HIS-30M Methanol sol having minute SnO₂/WO₃ complex particles dispersed therein and exhibiting an average particle diameter of 25 nm and a solids concentration of 30% (produced by Nissan Chemicals Industries, Ltd.)

HIS-30MN Methanol sol having minute SnO₂/WO₃ complex particles dispersed therein and exhibiting an average particle diameter of 30 nm and a solids concentration of 30% (produced by Nissan Chemicals Industries, Ltd.)

AMT-130S Methanol sol having minute Sb₂O₃ particles dispersed therein and exhibiting an average particle diameter of 15 to 20 nm and a solids concentration of 30% (produced by Nissan Chemicals Industries, Ltd.)

### b) Polyvinyl butyral resin

S-LEC BM-1 Polyvinyl butyral resin having an average polymerization degree of 600 and a degree of butyralization of 65% (produced by Sekisui Chemical Co., Ltd.)

S-LEC BM-2 Polyvinyl butyral resin having an average polymerization degree of 800 and a degree of butyralization of 68% (produced by Sekisui Chemical Co., Ltd.)

S-LEC BM-5 Polyvinyl butyral resin having an average polymerization degree of 850 and a degree of butyralization of 65% (produced by Sekisui Chemical Co., Ltd.)

S-LEC BH-S Polyvinyl butyral resin having an average polymerization degree of 1,000 and a degree of butyralization of 70% (produced by Sekisui Chemical Co., Ltd.)

### c) Surfactant

Florad FC 430 Fluorine type surfactant (produced by Sumitomo 3M K.K.)

SH 30 PA Silicon type surfactant (produced by Toray-Dow Corning K.K.)

L7001 Silicon type surfactant (produced by Nippon Unicar K.K.)

### [B] Preparation of primer composition containing minute chemical oxide particles

### (1) Preparation of BaTiO₃/polyvinyl butyral solution (B'-1)

In a reaction vessel provided with a rotor, 287.4 parts by weight of isopropanol, 43.9 parts by weight of barium diisopropoxide, and 48.9 parts by weight of titanium tetraisopropoxide were sequentially placed and were collectively refluxed by heating for two hours. The resultant solution was cooled to room temperature. Then, 18.6 parts by weight of purified water was gradually dropped into the cooled solution over a period of 10 minutes to give rise to minute particles of BaTiO₂. The resultant solution and 1.2 parts by weight of diisobutyl amine as a stabilizer and a solution of 20 parts by weight of polyvinyl butyral resin (produced by Sekisui Chemical Co., Ltd. and marketed under trademark designation of "S-LEC BM-2") in 180 parts by weight of isopropanol added thereto were collectively stirred thoroughly for one hour to obtain 600 parts by weight of an isopropanol solution of BaTiO₃/polyvinyl butyral.

### (2) Preparation of minute compound oxide particles/polyvinyl butyral solutions (B'-2) - (B'-10)

Minute compound oxide particles/polyvinyl butyral solutions (B'-2) - (B'-10) were prepared by following the procedure used for the minute compound oxide particles/polyvinyl butyral solution (B'-1) while using the formulations shown in Table 2.

### (3) Preparation of primer composition (B-1)

In a reaction vessel provided with a rotor, 4.3 parts by weight of methyl trimethoxysilane and 20 parts by weight of isopropanol were placed and 1.7 parts by weight of 0.01N hydrochloric acid was added thereto and they were collectively stirred for one hour to effect hydrolysis.

The resultant hydrolysate and a solution of 2.7 parts by weight of titanium tetra-n-butoxide in 20 parts by weight of isopropanol added thereto were collectively stirred for 30 minutes to obtain an organoalkoxysilane/titanium alkoxide hydrolyzed condensate.

To the resultant hydrolyzed condensate solution, 600 parts by weight of a BaTiO₂/polyvinyl butyral solution (B'-1), 2 parts by weight of dibutyl tin dilaurate as a curing catalyst, and 1 part by weight of a fluorine type surfactant (produced by Sumitomo 3M K.K. and marketed under trademark designation of "Florad FC 430") were sequentially added. The resultant mixture and 200 parts by weight of methanol, 108.3 parts by weight of isopropanol, and 40 parts by weight of purified water were added sequentially and they were collectively stirred for one hour. Then, the resultant mixture was passed through a membrane filter, 3 µm in mesh, to prepare a primer composition (B-1).

### (4) Preparation of primer compositions (B-2) - (B-10)

Primer compositions (B-2) - (B-10) were prepared by following the procedure used for the preparation of the primer composition (B-1) while using the formulations shown in Table 3.

### [C] Preparation of hard coat solution

### (1) Preparation of silicon type hard coat solution (C-1) of high refractive index

In a reaction vessel provided with a rotor, 180 parts by weight of γ-glycidoxypropyl trimethoxysilane was placed and stirred vigorously with a magnetic stirrer and 40 parts by weight of an aqueous 0.01N hydrochloric acid solution was wholly added thereto and they were collectively hydrolyzed for one hour to obtain a partially condensed hydrolysate.

The hydrolysate mentioned above and 630 parts by weight of a methanol sol having minute SnO₂/WO₃ complex particles dispersed therein (produced by Nissan Chemicals Industries, Ltd. and marketed under product code of "HIS-30MN"), 4 parts by weight of aluminum ethylenediamine tetraacetate as a curing catalyst, and 0.45 part by weight of a silicon type surfactant (produced by Toray-Dow Corning K.K. and marketed under product code of "SH 30PA") as a leveling agent added thereto were collectively stirred until thorough mixture. The resultant mixture was passed through a membrane filter, 3 µm in mesh, to prepare a hard coat solution (C-1).

### (2) Preparation of silicon type hard coat solution (C-1') of high refractive index

A hard coat solution (C-1') was separed by following the procedure used for the preparation of the hard coat solution (C-1) while using methanol sol (HIS-30MN) having minute SnO₂/WO₃ complex particles dispersed therein (produced by Nissan Chemicals Industries, Ltd.) in the place of the methanol sol (HIS-30MN) having minute SnO₂/WO₃ complex particles dispersed therein (produced by Nissan Chemicals Industries, Ltd.).

### (3) Preparation of silicon type hard coat solution (C-2) of high refractive index

In a reaction vessel provided with a rotor, 210 parts by weight of γ-glycidoxypropyl trimethoxysilane was placed and stirred vigorously with a magnetic stirrer and 40 parts by weight of an aqueous 0.01N hydrochloric acid solution was added wholly thereto and they were collectively hydrolyzed for one hour to obtain a partially condensed hydrolysate.

The hydrolysate consequently obtained and 600 parts by weight of a methanol sol having minute particles of Sb₂O₃ dispersed therein (produced by Nissan Chemicals Industries, Ltd. and marketed under product code of "AMT-130S"), 4 parts by weight of aluminum acetyl acetonate as a curing catalyst, and 0.5 part by weight of a silicon type surfactant (produced by Nippon Unicar K.K. and marketed under product code of "L7001") as a leveling agent added thereto were stirred until thorough mixture. Then, the resultant mixture was passed through a membrane filter, 3 µm in mesh, to prepare a hard coat solution (C-2).

### [D] Production of plastic lens possessed of complex film and evaluation of quality

A plastic lens possessed of a complex film as schematically illustrated in the diagram was produced and rated for quality.

### [Example 1]

### (1-1) Application of primer composition and curing

An eyeglass grade plastic lens NLIV made of a thermosetting urethane resin and having a degree of -4.00 dioptre, a central thickness of 1.0 mm, and a refractive index of 1.66 was immersed in an aqueous 10% NaOH solution at 60°C by way of pretreatment, then washed with hot water, and dried. The primer composition (A-1) was applied to the opposite surfaces of this plastic lens 1 by the dipping method (speed of pulling 5 mm/sec.) and heat-treated at 90°C for 30 minutes to cure the primer and form a primer layer 2.

### (1-2) Application of silicon type hard coat solution of high refractive index and curing

The silicon type hard coat solution of high refractive index (C-1') was applied to the opposite surfaces of the plastic lens provided with the primer layer 2 obtained in (1-1) by the dipping method (speed of pulling 5 mm/sec.). The coated lens was heat-treated at 100°C for four hours to cure the hard coat layer 3.

### (1-3) Formation of antireflection film

A five-layer SiO₂/ZrO₂ type antireflection film 4 was formed by the vacuum deposition method one each on the opposite surfaces of the plastic lens provided with the primer layer 2 and the hard coat layer 3 obtained in (1-2).

### (1-4) Evaluation of quality of plastic lens possessed of complex film

The plastic lens possessed of the complex film obtained in (1-3) was subjected to the following tests to evaluate the quality thereof. The results of this evaluation are shown in Table 4.

### 1) Adhesiveness of film

For the evaluation of the adhesiveness of the film, a crosshatch tape test was carried out by the following method. On the surface of the coating layer, 100 crosscut squares (1 mm²) were formed with a cutter knife. Then, an adhesive cellophane tape (produced by Nichiban K.K. and marketed under trademark designation of "Cellotape") was strongly applied to the surface containing the crosscut squares. The tape, with one corner thereof nipped by fingers, was forcibly peeled in the direction of 90°. This peeling test was carried out on the same sample 10 times.

Thereafter, the surface of the coating layer was visually examined to determine the number of crosscut squares, N, which had escaped being peeled from the lens. The adhesiveness of the film was reported as X/100. In this case, the degree of adhesiveness increases in accordance as the magnitude of the numeral, X, increases. When the result of the crosshatch tape test is "100/100", it indicates that absolutely no separation of the film has occurred.

### 2) Resistance to scratch

The surface of the antireflection film of the plastic lens provided with the complex film was rubbed 30 times with a wad of steel wool (#0000) which was pressed under a load of 600 g against the surface. The surface was then visually examined to determine the degree of scratch inflicted thereon. The degree was rated on the three-point scale, wherein
A: Scratch sustained in not more than 10% of area
B: Scratch sustained in more than 10% and not more than 30% of area
C: Scratch sustained in more than 30% of area

### 3) Impact resistance

The impact resistance of the plastic lens possessed of the complex film was rated by the falling ball impact test. A steel ball weighing 20.0 g was naturally dropped from a height of 127 cm to the central part of the plastic lens repeatedly until the plastic lens fractured or sustained a crack. The number of drops made before the fracture or crack was reported as the impact resistance. The maximum number of drops was 5.

### 4) Heat resistance

The plastic lens possessed of the complex film was left standing for 10 minutes in a constant temperature oven at 100°C. After the standing, it was extracted into the ambience of normal temperature and visually examined to determine the presence or absence of the occurrence of a crack, the size of a crack, if any, and the change of appearance by aging on the following three-point scale. The term "fine crack" means that the occurrence of a crack was confirmed and the crack disappeared after 15 minutes' standing and the term "medium thick crack" means that the occurrence of a crack was confirmed and the crack did not disappear after 15 minutes' standing.
A: No crack occurred after standing at 100°C for 10 minutes
B: Fine crack occurred after standing at 100°C for 10 minutes
C: Medium thick crack occurred after standing at 100°C for 10 minutes

### 5) Weatherability

The weatherability of the plastic lens possessed of the complex film was rated by a weathering test performed for 300 hours by the use of an infrared long-life fade-o-meter (produced by Suga Shikenki K.K.). After this test, the lens was tested for degree of yellowing. The result of the test was rated on the following three-point scale.
A: Degree of yellowing of less than 2.0 after 300 hours
B: Degree of yellowing of not less than 2.0 and less than 2.5 after 300 hours
C: Degree of yellowing of not less than 2.5 after 300 hours

### 6) Appearance

The appearance of the plastic lens possessed of the complex film was determined by placing the sample in a dark room, projecting the beam of light from a fluorescent lamp on the sample in the dark room, and visually observing the transparency of the lens. The result of the test was rated on the following three-point scale.
A: No cloudiness
B: Slight visible cloudiness
C: Clearly visible cloudiness

### 7) Interference fringe

The presence or absence of the occurrence of an interference fringe in the plastic lens possessed of the complex film was determined by placing the sample in a dark room, causing the beam of light from a fluorescent lamp to be reflected on the surface of the lens, and visually observing the lens to determine the occurrence of a fringe pattern due to interference of light. The result of the test was rated on the following three-point scale.
A: No discernible fringe pattern
B: Slightly discernible fringe pattern
C: Conspicuously discernible fringe pattern

### [Example 2] - [Example 60]

Plastic lenses possessed of a complex film were obtained by following the procedure of Example 1 while using primer solutions and hard coat solutions shown in Table 4 instead. The plastic lens substrate used in this case were NLIV having a degree of -4.00 dioptre and a central thickness of 1.0 mm and NLEF having a degree of -4.00 dioptre and a central thickness of 1.0 mm as shown in Table 4. The plastic lenses thus obtained were tested and rated for quality in the same manner as in Example 1. The results are shown in Table 4.

### [Comparative Example 1]

### (1) Preparation of primer composition (D-1)

One hundred (100) parts by weight of a hexamethylene diisocyanate type non-blocked polyisocyanate (produced by Nippon Polyurethane Kogyo K.K. and marketed under trademark designation of "Coronate H"), 167 parts by weight of a polyester type polyol (produced by Nippon Polyurethane Kogyo K.K. and marketed under trademark designation of "Nipporan 125"), 2 parts by weight of zinc octylate as a curing catalyst, 0.1 part by weight of a fluorine type surfactant (produced by Sumitomo 3M K.K. and marketed under trademark designation of "Florad FC 430") as a leveling agent, and 500 parts by weight of ethyl acetate and 250 parts by weight of methylethyl ketone as solvents were uniformly mixed.

### (2) Preparation of plastic lens possessed of complex film and evaluation of quality

A plastic lens possessed of a complex film was prepared by following the procedure of Example 1 while using the primer composition (D-1) instead and during the primer at 60°C for 30 minutes. The plastic lens substrate was NLIV having a degree of -4.00 dioptre and a central thickness of 1.0 mm. The evaluation of quality was performed in the same manner as in Example 1. The results of rating are shown in Table 4.

### [Comparative Example 2]

### (1) Preparation of primer composition (D-2)

The amount 250 parts by weight of a blocked polyisocyanate (produced by Nippon Polyurethane Kogyo K.K. and marketed under trademark designation of "Coronate 2529"), 180 parts by weight of a polyester type polyol (produced by Nippon Polyurethane Kogyo K.K. and marketed under trademark designation of "Nipporan 1100"), 2 parts by weight of zinc octylate as a curing catalyst, 1.5 parts by weight of a silicon type surfactant as a leveling agent, and 1000 parts by weight of ethyl cellosolve and 1500 parts by weight of methanol as solvents were uniformly mixed.

### (2) Preparation of plastic lens possessed of complex film and evaluation of quality

A plastic lens possessed of a complex film was produced by following the procedure of Example 1 while using the primer composition (D-2) instead and curing the primer at 130°C for 60 minutes. The plastic lens substrate used herein was NLEF having a degree of -4.00 dioptre and a central thickness of 1.0 mm. The evaluation of quality was performed in the same manner as in Example 1. The results of the evaluation are shown in Table 4.

### [Comparative Example 3]

A plastic lens provided with a hard coat layer and an anti-reflection coat layer was produced by using an NL plastic lens having a degree of -4.00 dioptre and a central thickness of 1.0 mm while omitting the formation of a primer layer. It was tested for quality and the result of the test was rated in the same manner as in Example 1. The results of the evaluation are shown in Table 4.

### [Comparative Example 4]

A plastic lens provided with a hard coat layer and an anti-reflection coat layer was produced by using an NLEF plastic lens having a degree of -4.00 dioptre and a central thickness of 1.0 mm while omitting the formation of a primer layer. It was tested for quality and the result of the test was rated in the same manner as in Example 1. The results of the evaluation are shown in Table 4.

### [E] Evaluation of primer composition for storage life

The primer compositions (A-1) - (A-20) prepared in [A], the primer compositions (B-1) - (B-10) prepared in [B], and the primer compositions (D-1) and (D-2) prepared in Comparative Example 1 and Comparative Example 2 were stored at 5°C and kept under survey for change in viscosity. The duration in which the increase in viscosity of a given primer composition was within 5% from the level immediately after preparation was taken as the storage life of the primer composition and used for evaluation. The results of the evaluation are shown in Table 5.

### [F] Evaluation of dyed lens for change of color tone

An eyeglass grade plastic lens NLIV made of a thermosetting urethane resin and having a refractive index of 1.66 (produced by Nippon Kogaku K.K.) and an eyeglass grade plastic lens NLEF made of a thermosetting urethane resin and having a refractive index of 1.60 (produced by Nippon Kogaku K.K.) were dyed by an immersion treatment performed in a bath of 7 parts by weight of Nikon Light Brown, an ordinary disperse dye in 1,000 parts by weight at 90°C for 10 minutes. The dyed lenses were tested for stimulus index Y in the LUV three-dimensional coordinates system by the use of a high-speed integrating-sphere type spectral transmission tester (produced by Murakami Shikisai Gijutsu Kenkyusho and marketed under product code of "DOT-3"). On the dyed plastic lenses, the primer compositions (A-1) - (A-20), (B-1) - (B-10), and (D-1) and (D-2) were severally deposited and cured by following the procedure of (1-1) in Example 1. The dyed plastic lenses now provided with primer coats were tested again for stimulus index Y. The color differences, DE, of the plastic lenses before and after the application of primers were calculated. The changes in color tone was rated on the following three-point scale. The results of the evaluation are shown in Table 5.
A: Less than 1.5 of color difference DE
B: Not less than 1.5 and less than 2.5 of color difference DE
C: Not less than 2.5 of color difference DE

It is clearly noted from Table 4 and Table 5 that the primer compositions according to this invention enjoy long lengths of storage life, require a heat treatment performed at a relatively low temperature for a short span of time to be cured, allow formation of a coating film excelling in fastness of adhesion and smoothness and, at the same time, notably improve the impact strength of a plastic optical part.

Further, the dyed optical parts have such highly useful characteristics as showing virtually no change in color tone and incurring virtually no exudation from the primer layers during the formation of hard coat layers.

Particularly, the plastic lenses provided with a primer layer formed by curing a primer composition of this invention, a hard coat film, and an antireflection layer excel in impact resistance and pass the impact resistance test specified by the FDA standard of the U.S.

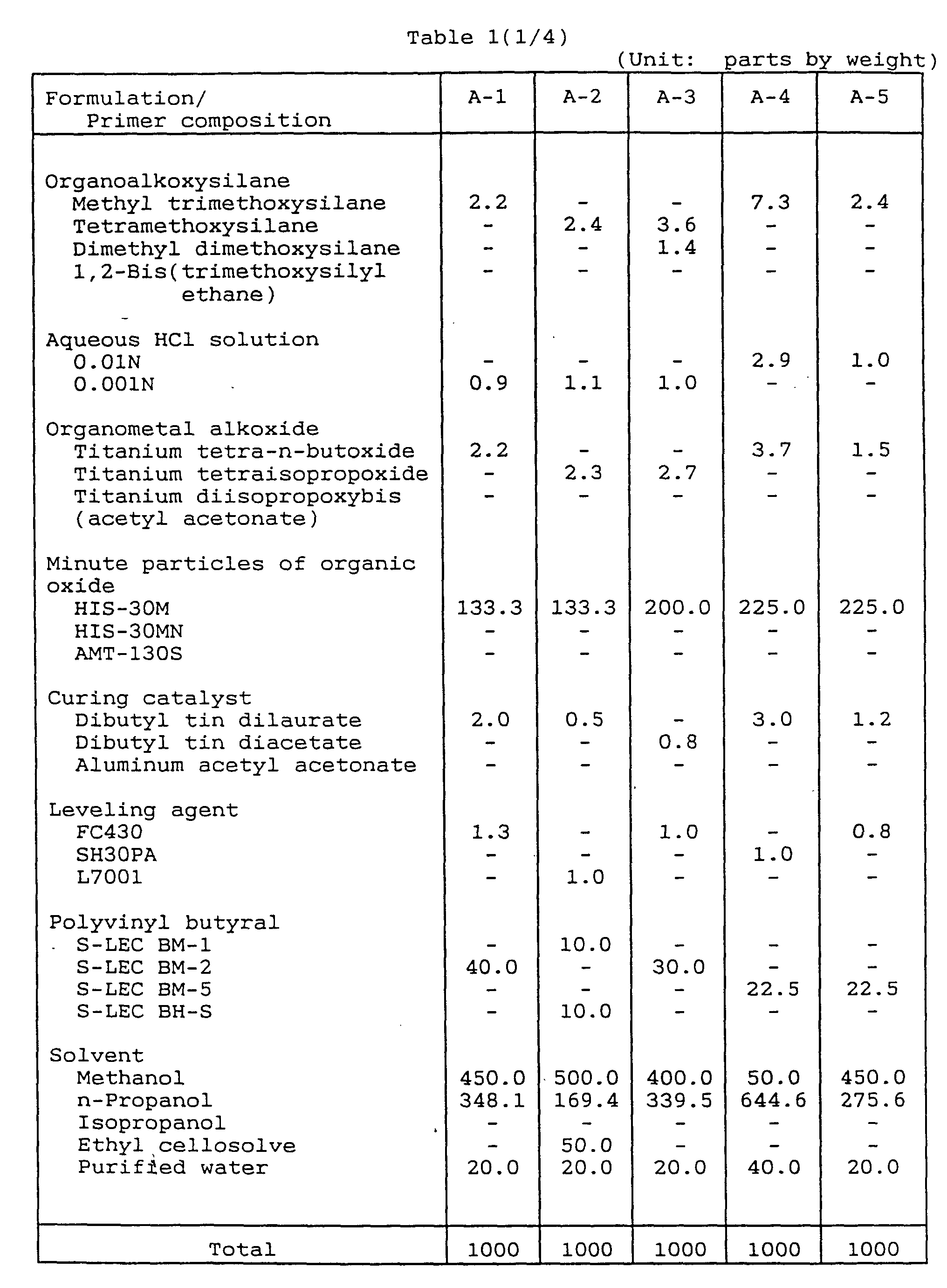

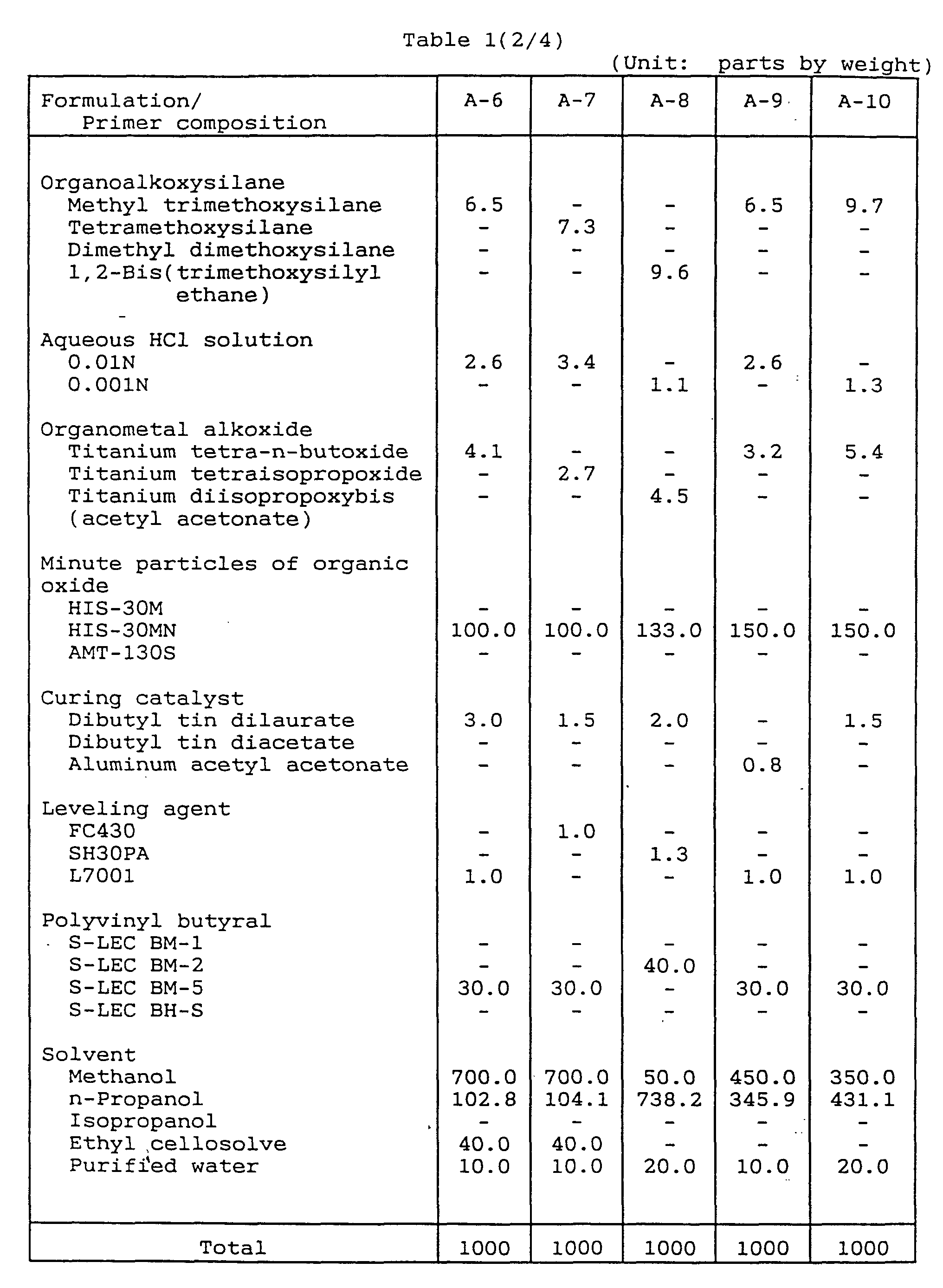

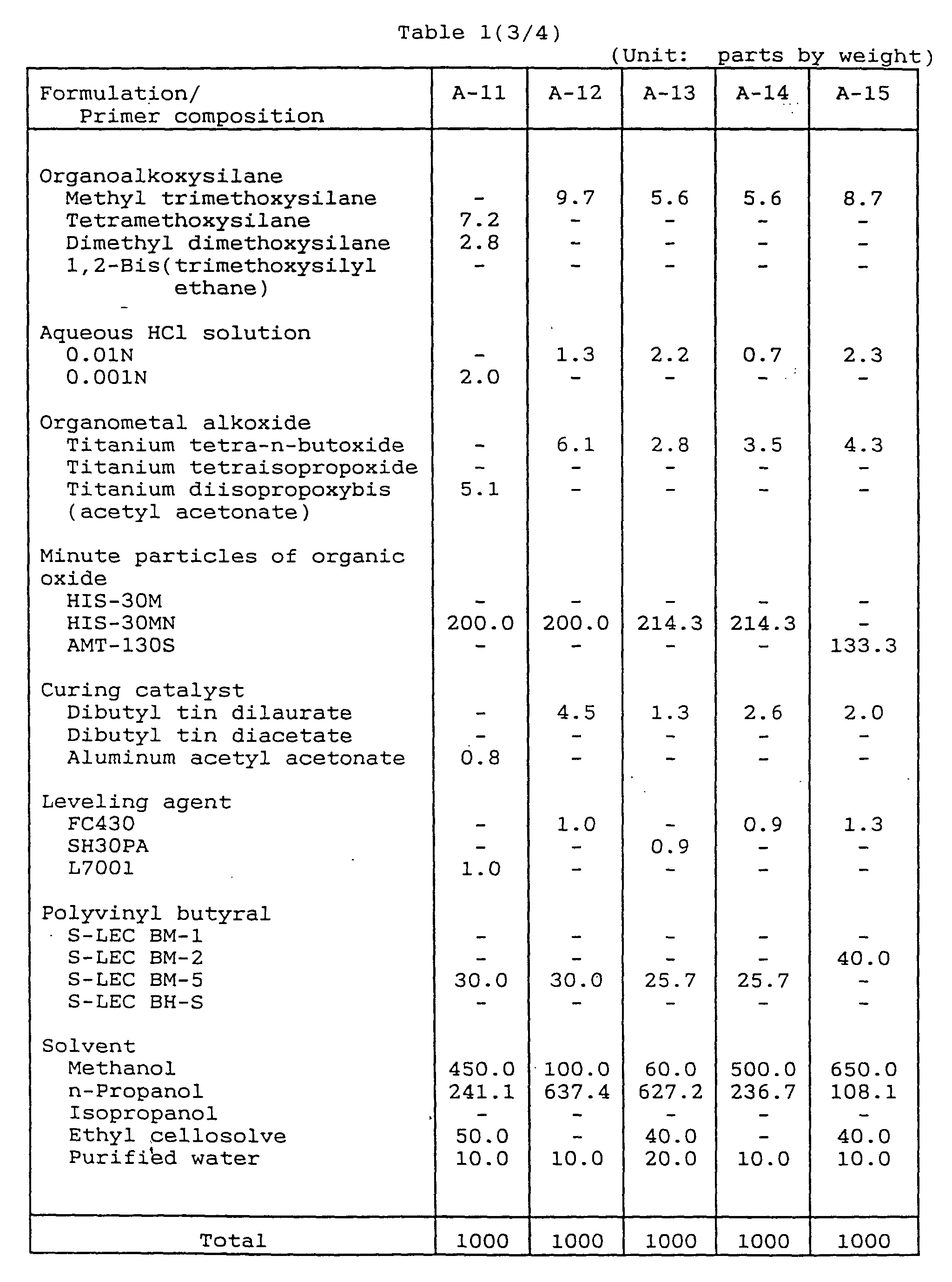

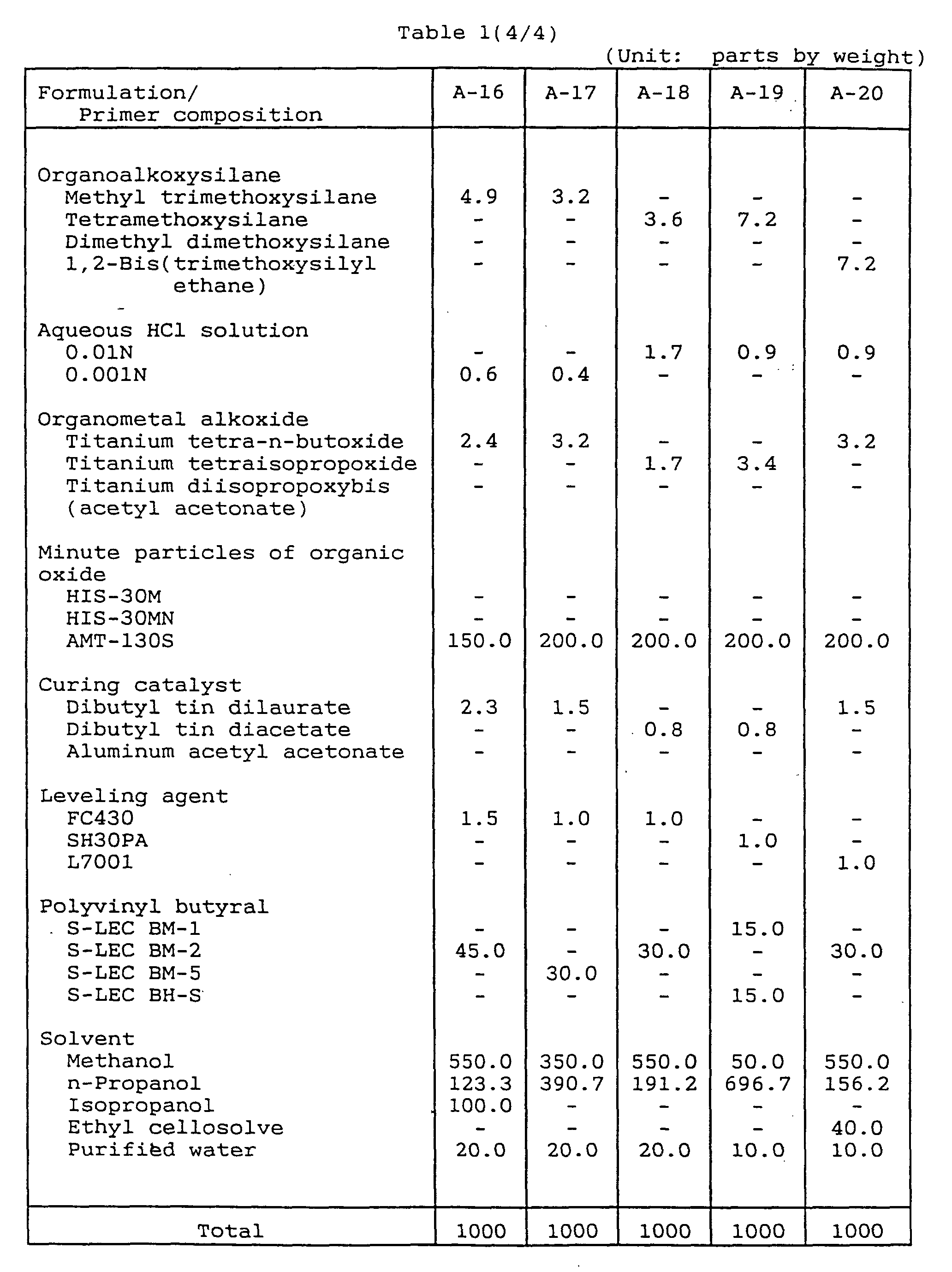

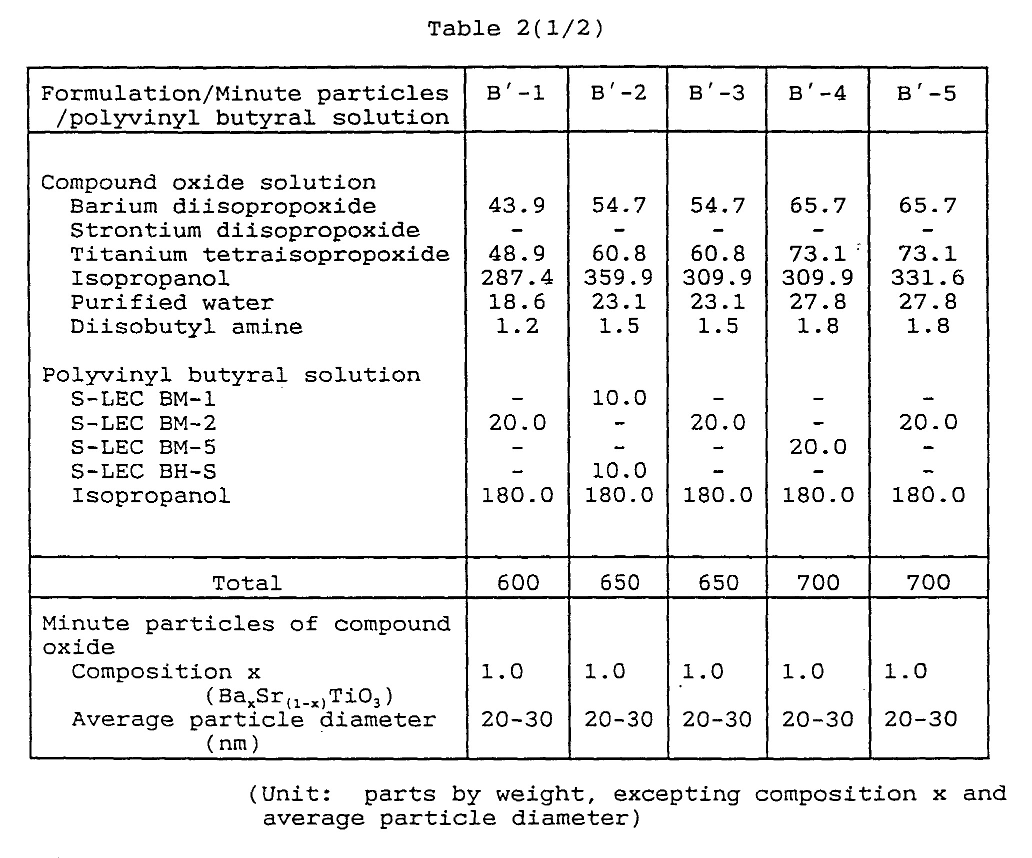

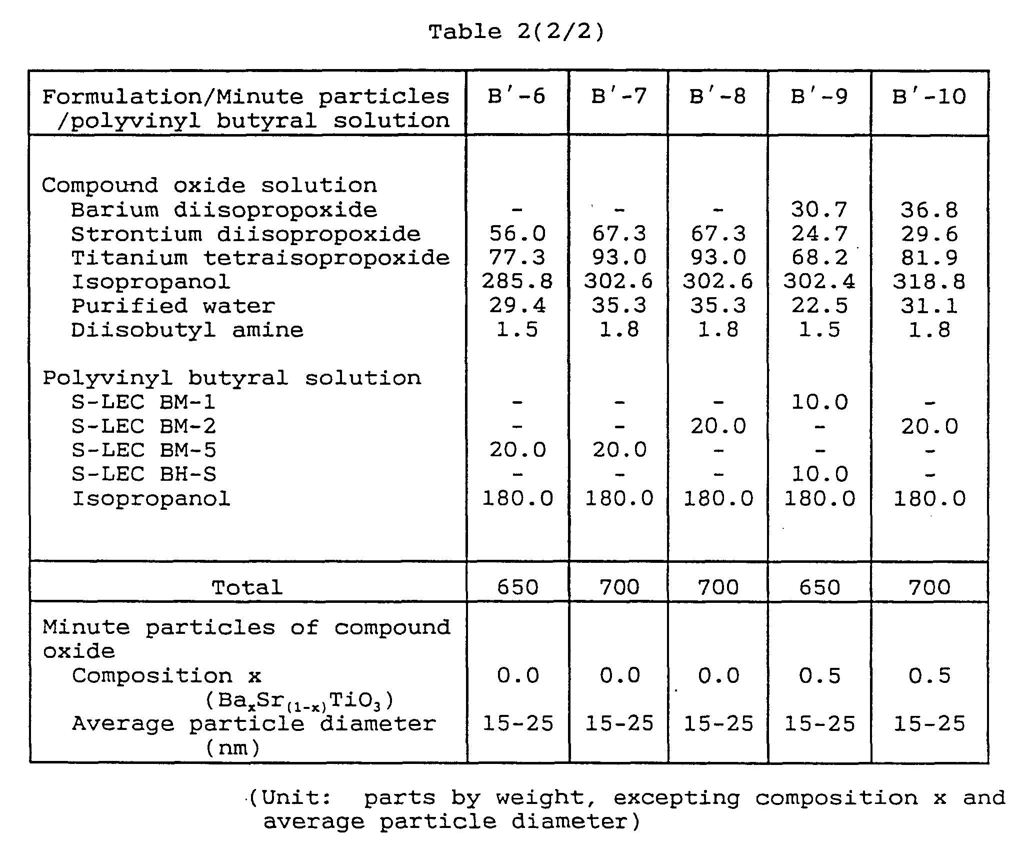

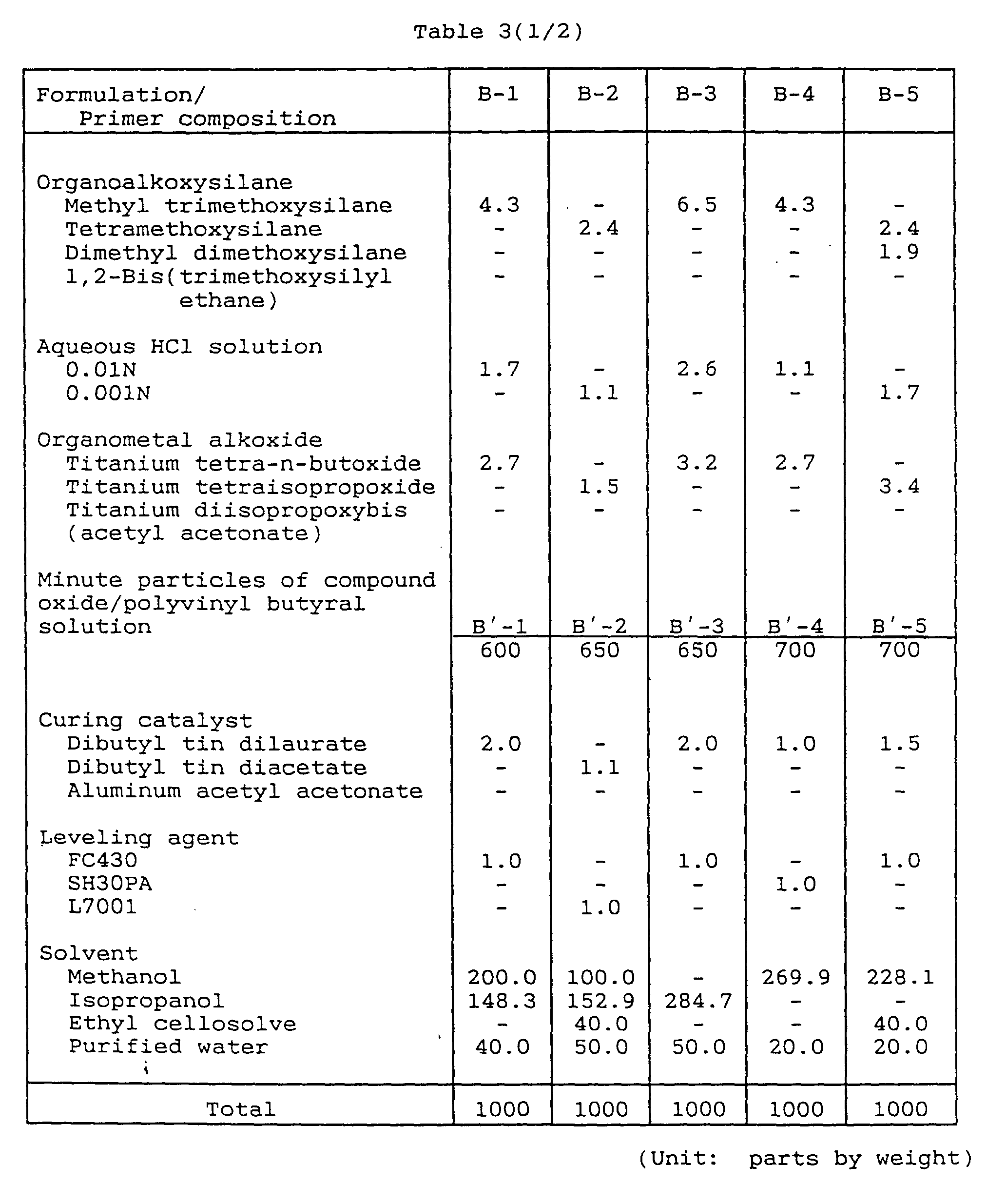

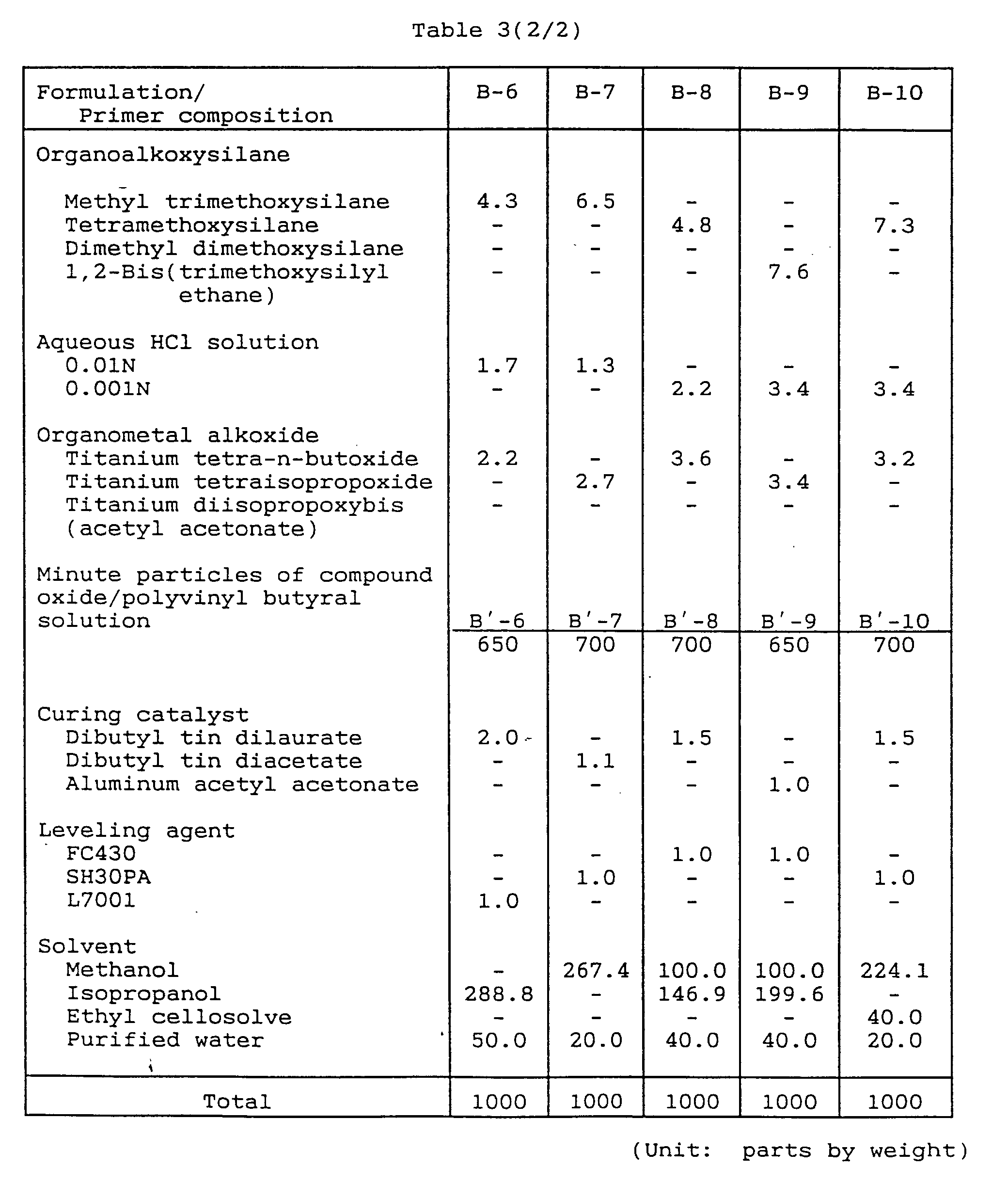

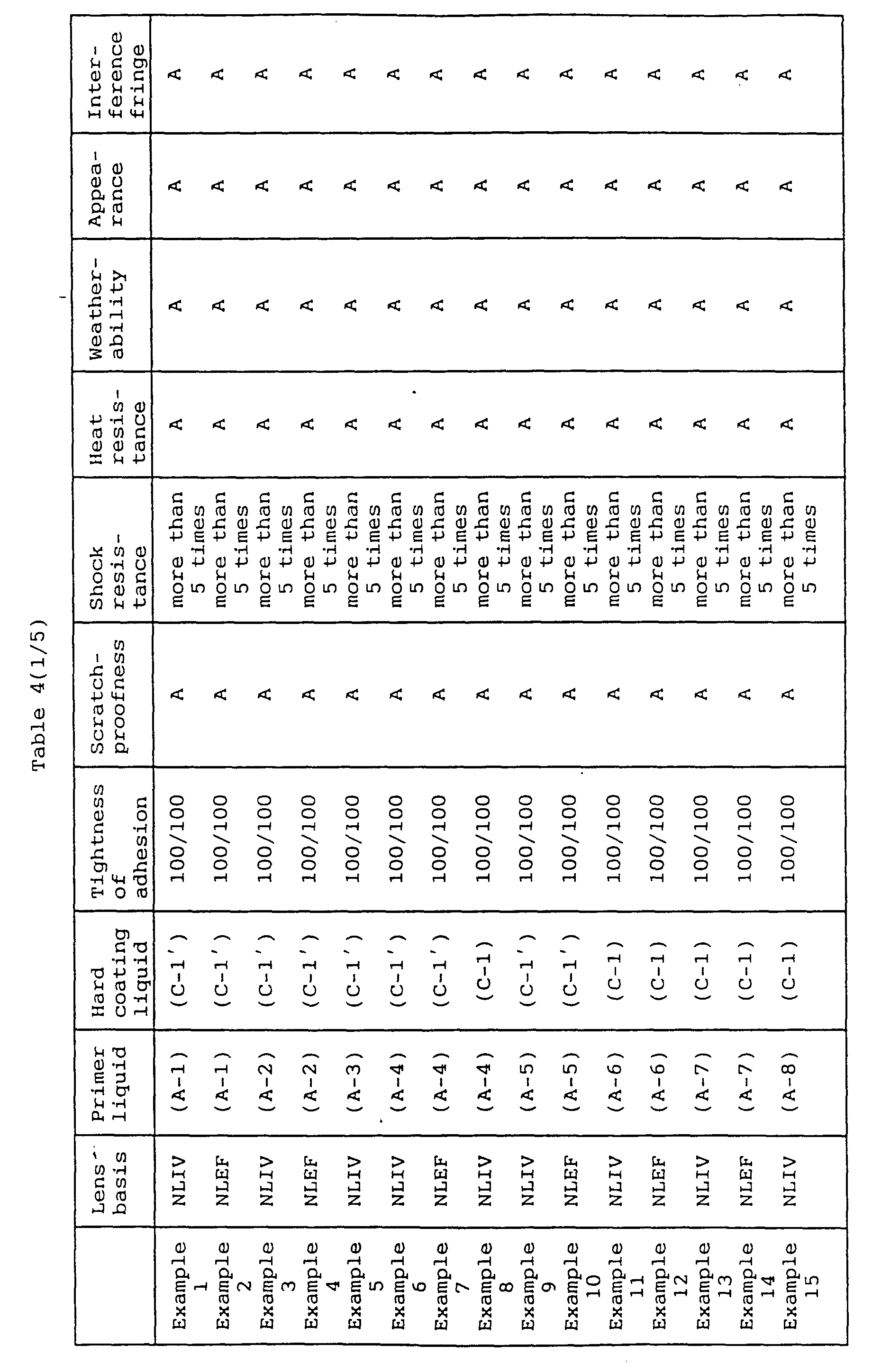

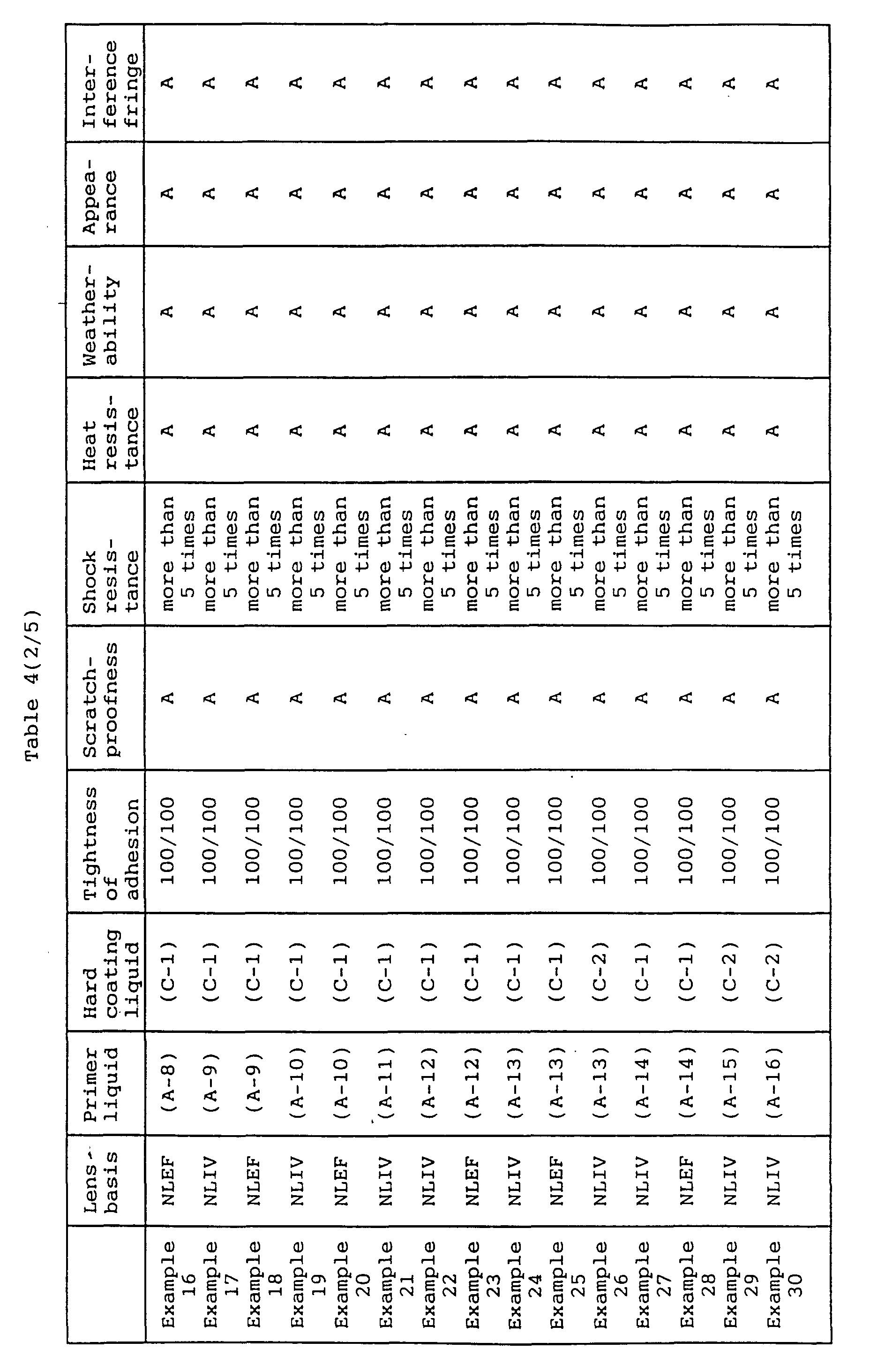

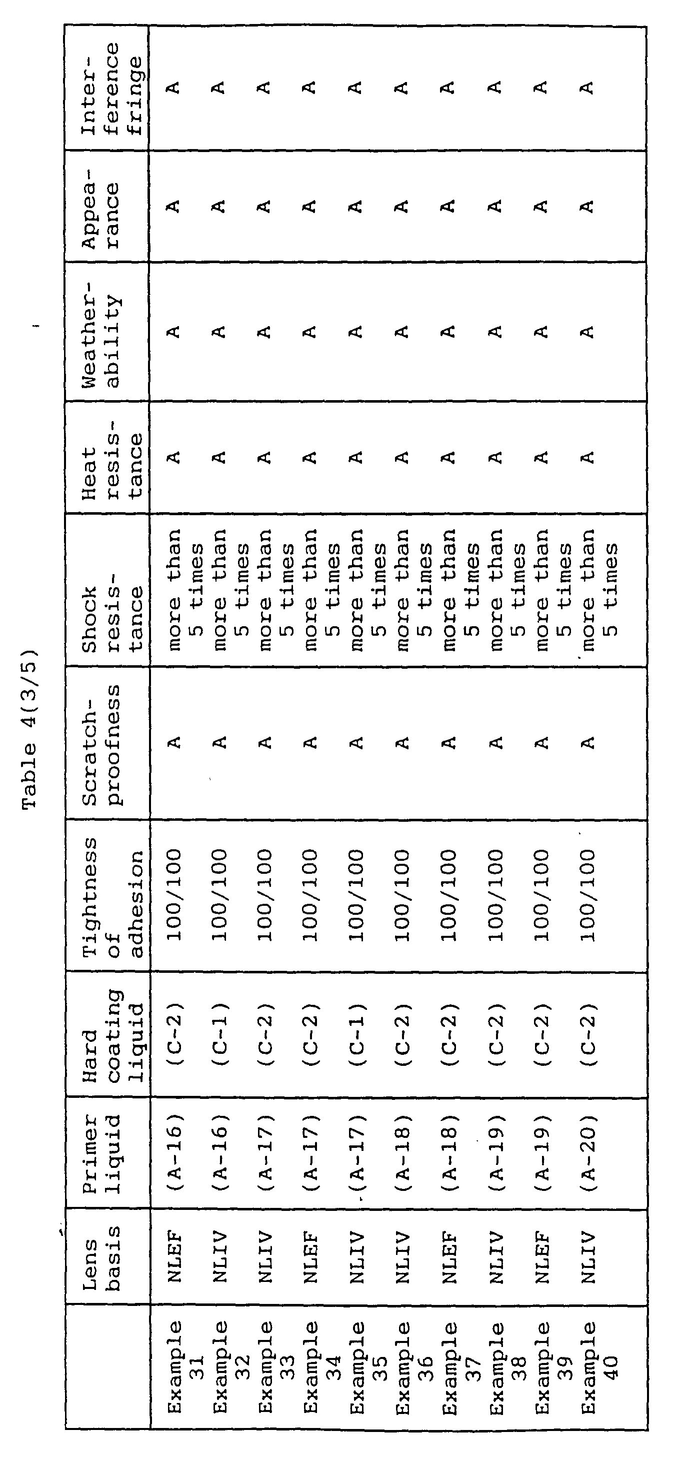

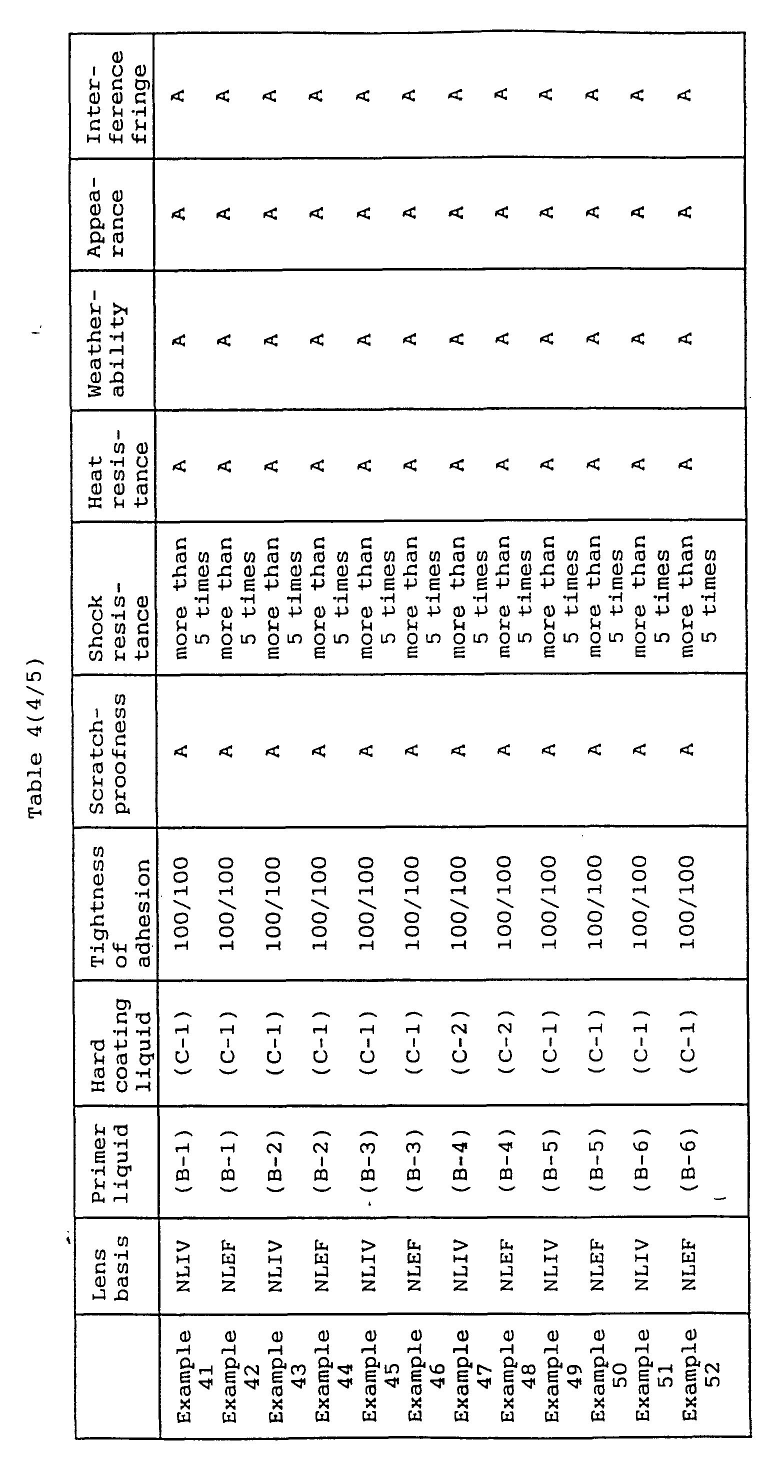

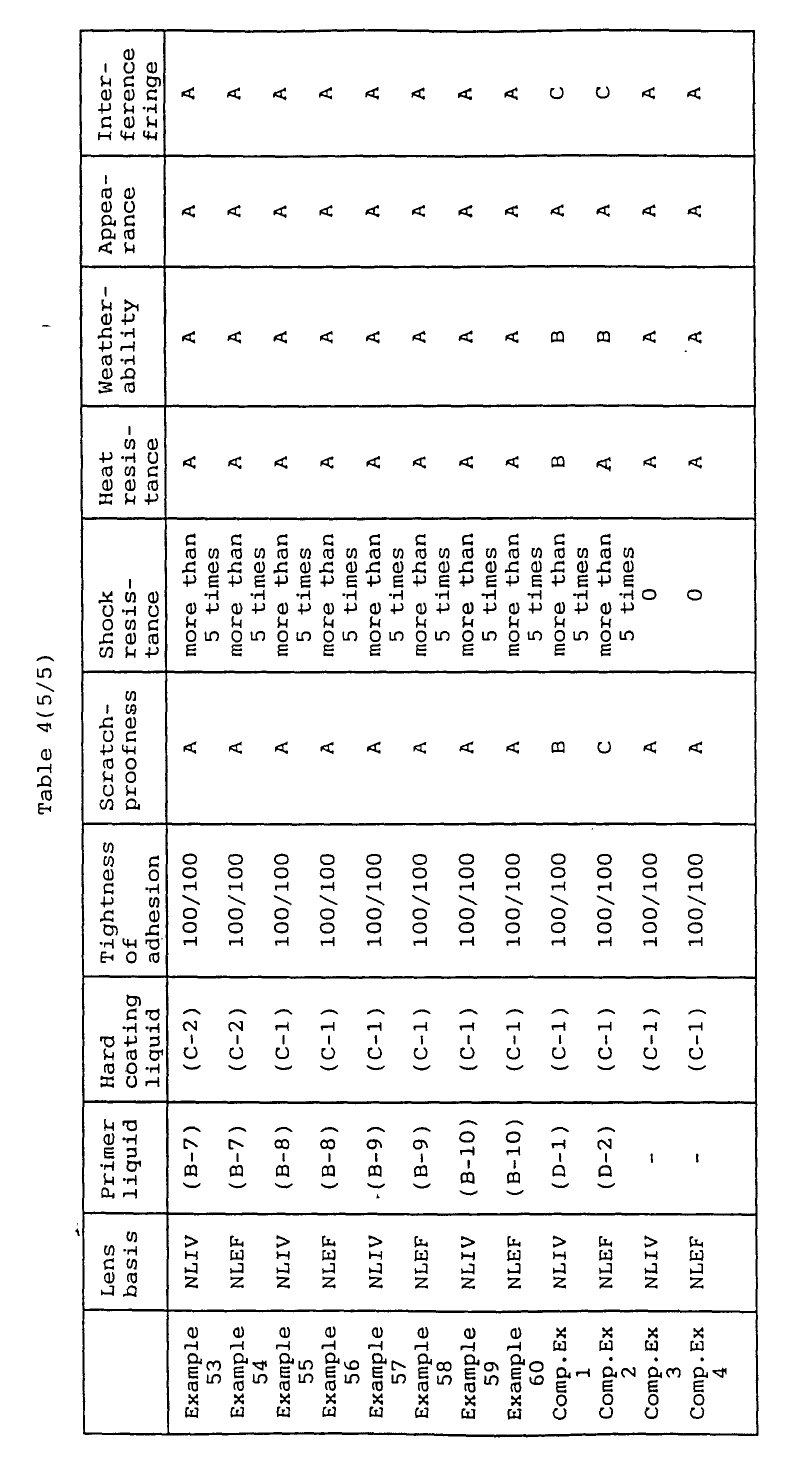

**Table 5(1/2)**

| | Storage life of primer | Change in tone of dyed lens | |
|---|---|---|---|
| | | NLIV | NLEF |
| (A-1) | more than 30 days | A | A |
| (A-2) | more than 30 days | A | A |
| (A-3) | more than 30 days | A | A |
| (A-4) | more than 30 days | A | A |
| (A-5) | more than 30 days | A | A |
| (A-6) | more than 30 days | A | A |
| (A-7) | more than 30 days | A | A |
| (A-8) | more than 30 days | A | A |
| (A-9) | more than 30 days | A | A |
| (A-10) | more than 30 days | A | A |
| (A-11) | more than 30 days | A | A |
| (A-12) | more than 30 days | A | A |
| (A-13) | more than 30 days | A | A |
| (A-14) | more than 30 days | A | A |
| (A-15) | more than 30 days | A | A |
| (A-16) | more than 30 days | A | A |
| (A-17) | more than 30 days | A | A |
| (A-18) | more than 30 days | A | A |
| (A-19) | more than 30 days | A | A |
| (A-20) | more than 30 days | A | A |

**Table 5(2/2)**

| | Storage life of primer | Change in tone of dyed lens | |
|---|---|---|---|
| | | NLIV | NLEF |
| (B-1) | more than 30 days | A | A |
| (B-2) | more than 30 days | A | A |
| (B-3-) | more than 30 days | A | A |
| (B-4) | more than 30 days | A | A |
| (B-5) | more than 30 days | A | A |
| (B-6) | more than 30 days | A | A |
| (B-7) | more than 30 days | A | A |
| (B-8) | more than 30 days | A | A |
| (B-9) | more than 30 days | A | A |
| (B-10) | more than 30 days | A | A |
| (D-1) | 1 day | A | A |
| (D-2) | more than 30 days | C | C |

## Claims

1. A primer composition, comprising
(A) a polyvinyl acetal of the general formula (I) 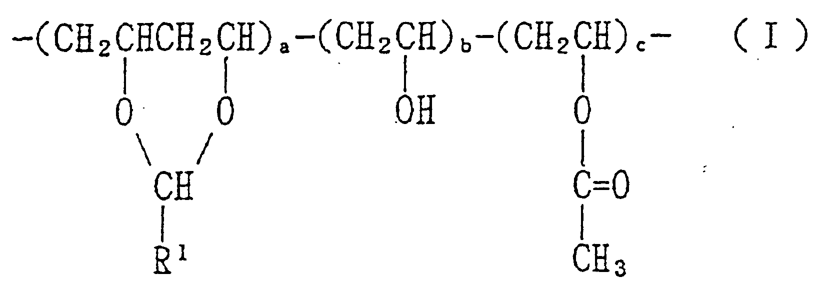 in which R¹ is a hydrogen atom or an alkyl group having 1 to 20 carbon atoms, the proportion of acetal group repeating units a being from 10 to 90, the proportion of OH group-containing repeating units b being from 10 to 90 and the proportion of acetyl group repeating units c being from 0 to 10, and a + b + c = 100;
(B) at least one cross-linking agent selected from hydrolyzable organosilanes of the general formula (II)
R² _{d}R³ ₑ-Si-X¹ _{4-(d+e)} (II)
in which each of R² and R³ is a substituted or unsubstituted hydrocarbon group having 1 to 8 carbon atoms, X¹ is a hydrolyzing group, and each of d and e is 0 or an integer from 1 to 3, and hydrolysates thereof, and hydrolyzable organosilanes of the general formula (III)
X² _{(3-f)}R⁵ _{f}-Si-R⁴-Si-R⁶ _{g}X² _{(3-g)} (III)
in which R⁴ is an organic group having 2 to 8 carbon atoms, each of R⁵ and R⁶ is a substituted or unsubstituted hydrocarbon group having 1 to 8 carbon atoms, X² is a hydrolyzing group, and each of f and g is 0, 1 or 2, and hydrolysates thereof;
(C) at least one compound selected from metal alkoxides of the general formula (IV) 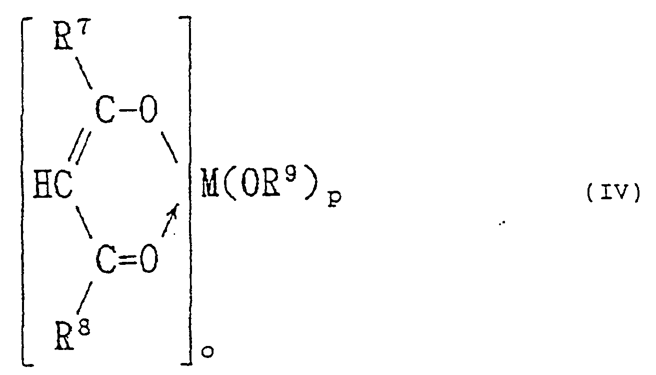 in which R⁷ is an alkyl or alkoxy group having 1 to 4 carbon atoms, each of R⁸ and R⁹ is an alkyl group having 1 to 4 carbon atoms, M is Al or Ti, o is 0, 1 or 2, p is an integer from 1 to 4, and o + p (the valency of M) is 3 or 4; and
(D) inorganic particles,
the composition containing, by weight, component (A) in an amount of 0.1 to 20%, component (B) in an amount of 0.01 to 10%, component (C) in an amount of 0.01 to 10% and component (D) in an amount of 0 to 30%.

2. A primer composition according to claim 1, which contains also 0.002 to 1% by weight of a curing catalyst.

3. A primer composition according to claim 1 or claim 2, wherein the polyvinyl acetal is polyvinyl butyral.

4. A primer composition according to any one of claims 1 to 3, wherein the hydrolyzable organosilane is an alkoxy silane the hydrolyzing group of which is an alkoxy group having 1 to 4 carbon atoms.

5. A primer composition according to any one of claims 1 to 4, wherein the inorganic particles are particles of at least one inorganic oxide selected from Al₂O₃, TiO₂, ZrO₂, Fe₂O₃, Sb₂O₅, BeO, ZnO, SnO₂, CeO₂, SiO₂ and WO₃ or of a complex thereof, and have an average particle diameter of 1 to 300 nm.

6. A primer composition according to any one of claims 1 to 4, wherein the inorganic particles are particles of a compound oxide selected from BaTiO₃, SrTiO₃, BaZrO₃, CoFe₂O₄, NiFe₂O₄, and MnFe₂O₄ or of a compound oxide solid solution selected from (Ba,Sr)TiO₃, Sr(Ti,Zr)O₃, and (Mn, Zn) Fe₂O₄ and have an average particle diameter of 1 to 300 nm.

## Patentansprüche

1. Eine Grundierungszusammensetzung, umfassend:
(A) ein Polyvinylacetal der allgemeinen Formel (I) 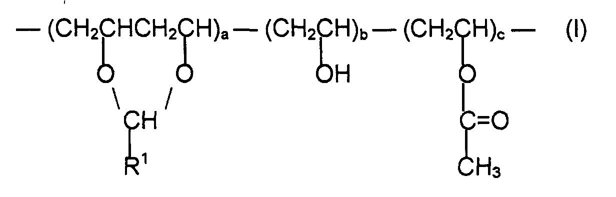 worin R¹ ein Wasserstoffatom oder eine Alkylgruppe mit 1 bis 20 Kohlenstoffatomen ist, wobei as Verhältnis der sich wiederholenden Acetalgruppe-Einheiten a 10 bis 90 beträgt, das Verhältnis der sich wiederholenden OH-Gruppe enthaltenden Einheiten b 10 bis 90 beträgt, und das Verhältnis der sich wiederholenden Acetylgruppe-Einheiten c 0 bis 10 beträgt, und a + b + c = 100 ist;
(B) wenigstens ein Vernetzungsmittel, ausgewählt aus hydrolysierbaren Organosilanen der allgemeinen Formel (II)
R² _{d}R³ ₑ-Si-X¹ _{4-(d+e)} (II)
worin jeder der Reste R² und R³ eine substituierte oder unsubstituierte Kohlenwasserstoffgruppe mit 1 bis 8 Kohlenstoffatomen ist, X¹ eine hydrolysierende Gruppe ist, und jedes von d und e 0 oder eine ganze Zahl von 1 bis 3 ist, und Hydrolysate davon, und hydrolysierbaren Organosilanen der allgemeinen Formel (III)
X² _{(3-f)}R⁵ _{f}-Si-R⁴-Si-R⁶ _{g}X² _{(3-g)} (III)
worin R⁴ eine organische Gruppe mit 2 bis 8 Kohlenstoffatomen ist, jeder Rest R⁵ und R⁶ eine substituierte oder unsubstituierte Kohlenwasserstoffgruppe mit 1 bis 8 Kohlenstoffatomen ist, X² eine hydrolysierende Gruppe ist, und jedes von f und g 0, 1 oder 2 ist, und Hydrolysate davon;
(C) wenigstens eine Verbindung, ausgewählt aus Metallalkoxiden der allgemeinen Formel (IV) 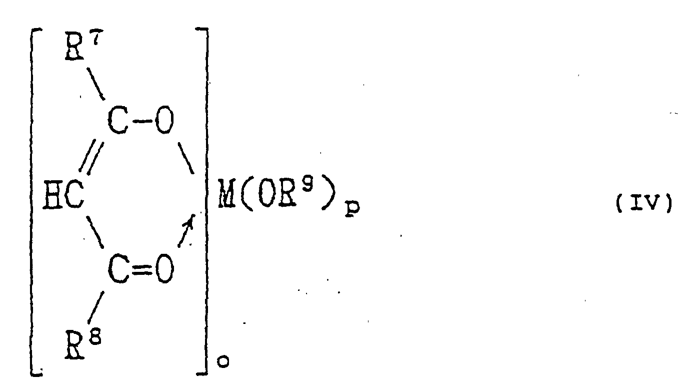 worin R⁷ eine Alkyl- oder Alkoxygruppe mit 1 bis 4 Kohlenstoffatomen ist, jeder Rest R⁸ und R⁹ eine Alkylgruppe mit 1 bis 4 Kohlenstoffatomen ist, M Al oder Ti ist, o 0, 1 oder 2 ist, p eine ganze Zahl von 1 bis 4 ist, und o + p (die Wertigkeit von M) 3 oder 4 ist; und
(D) anorganische Teilchen,
wobei die Zusammensetzung bezogen auf das Gewicht enthält: die Komponente (A) in einer Menge von 0,1 bis 20 %, die Komponente (B) in einer Menge von 0,01 bis 10 %, die Komponente (C) in einer Menge von 0,01 bis 10 % und die Komponente (D) in einer Menge von 0 bis 30 %.

2. Eine Grundierungszusammensetzung nach Anspruch 1, welche ebenfalls 0,002 bis 1 Gew.-% eines Härtungskatalysators enthält.

3. Eine Grundierungszusammensetzung nach Anspruch 1 oder Anspruch 2, worin das Polyvinylacetal Polyvinylbutyral ist.

4. Eine Grundierungszusammensetzung nach einem der Ansprüche 1 bis 3, worin das hydrolysierbare Organosilan ein Alkoxysilan ist, dessen hydrolysierende Gruppe eine Alkoxygruppe mit 1 bis 4 Kohlenstoffatomen ist.

5. Eine Grundierungszusammensetzung nach einem der Ansprüche 1 bis 4, worin die anorganischen Teilchen Teilchen von wenigstens einem anorganischen Oxid sind, ausgewählt aus Al₂O₃, TiO₂, ZrO₂, Fe₂O₃, Sb₂O₅, BeO, ZnO, SnO₂, CeO₂, SiO₂ und WO₃ oder aus einem Komplex davon, und einen mittleren Teilchendurchmesser von 1 bis 300 nm haben.

6. Eine Grundierungszusammensetzung nach einem der Ansprüche 1 bis 4, worin die anorganischen Teilchen Teilchen eines zusammengesetzten Oxids sind, ausgewählt aus BaTiO₃, SrTiO₃, BaZrO₃, CoFe₂O₄, NiFe₂O₄ und MnFe₂O₄ oder aus einer festen Lösung eines zusammengesetzten Oxids, ausgewählt aus (Ba, Sr)TiO₃, Sr(Ti, Zr)O₃ und (Mn, Zn)Fe₂O₄, und einen mittleren Teilchendurchmesser von 1 bis 300 nm haben.

## Revendications

1. Composition pour couche primaire, comprenant :
(A) un poly(acétal de vinyle) de formule générale (I) 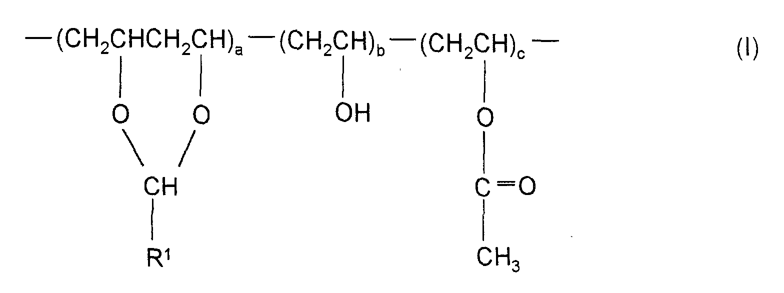 dans laquelle R¹ est un atome d'hydrogène ou un groupe alkyle ayant de 1 à 20 atomes de carbone, la proportion des motifs de répétition a de type groupe acétal étant comprise entre 10 et 90, celle des motifs de répétition b contenant le groupe OH étant comprise entre 10 et 90 et celle des motifs de répétition c de type groupe acétyle étant comprise entre 0 et 10, avec a + b + c = 100 ;
(B) au moins un agent de réticulation sélectionné parmi les organosilanes hydrolysables de formule générale (II)
R² _{d}R³ ₑ-Si-X¹ _{4-(d+e)} (II)
dans laquelle chacun des groupes R² et R³ étant un groupe hydrocarboné substitué ou non substitué ayant de 1 à 8 atomes de carbone, X¹ étant un groupe hydrolysant et chacun de d et de e étant égal à 0 ou est un nombre entier de 1 à 3, et les hydrolysats de ceux-ci, et
les organosilanes hydrolysables de formule générale (III)
X² _{(3-f)}R⁵ _{f}-Si-R⁴-Si-R⁶ _{g}X² _{(3-g)} (III)
dans laquelle R⁴ est un groupe organique ayant de 2 à 8 atomes de carbone, chacun des groupes R⁵ et R⁶ étant un groupe hydrocarboné substitué ou non substitué ayant de 1 à 8 atomes de carbone, X² étant un groupe hydrolysant et chacun de f et de g étant égal à 0, 1 ou 2, et les hydrolysats de ceux-ci ;
(C) au moins un composé sélectionné parmi les alcoxydes métalliques de formule générale (IV) 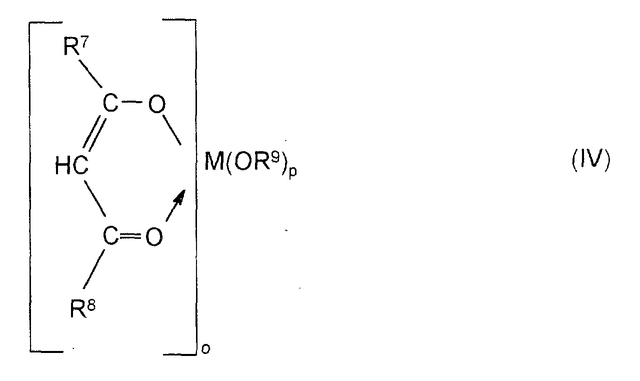 dans laquelle R⁷ est un groupe alkyle ou alcoxy ayant de 1 à 4 atomes de carbone, chacun de R⁸ et de R⁹ est un groupe alkyle ayant de 1 à 4 atomes de carbone, M est Al ou Ti, o est égal à 0, 1 ou 2, p est un nombre entier de 1 à 4 et o + p (la valence de M) est égal à 3 ou 4 ; et
(D) des particules inorganiques,
la composition contenant, en poids, le composant (A) en une quantité comprise entre 0,1 et 20 %, le composant (B) en une quantité comprise entre 0,01 et 10 %, le composant (C) en une quantité comprise entre 0,01 à 10 % et le composant (D) en une quantité comprise entre 0 et 30 %.

2. Composition pour couche primaire selon la revendication 1, qui contient en outre de 0,002 à 1 % en poids d'un catalyseur de polymérisation.

3. Composition pour couche primaire selon la revendication 1 ou la revendication 2, dans laquelle le poly(acétal de vinyle) est le poly(butyral de vinyle).

4. Composition pour couche primaire selon l'une quelconque des revendications 1 à 3, dans laquelle l'organosilane hydrolysable est un alcoxysilane dont le groupe hydrolysant est un groupe alcoxy ayant de 1 à 4 atomes de carbone.

5. Composition pour couche primaire selon l'une quelconque des revendications 1 à 4, dans laquelle les particules inorganiques sont des particules d'au moins un oxyde inorganique sélectionné parmi Al₂O₃, TiO₂, ZrO₂, Fe₂O₃, Sb₂O₅, BeO, ZnO, SnO₂, CeO₂, SiO₂ et WO₃ ou d'un complexe de ceux-ci et ont un diamètre moyen de particule qui varie de 1 à 300 nm.

6. Composition pour couche primaire selon l'une quelconque des revendications 1 à 4, dans laquelle les particules inorganiques sont des particules d'un oxyde mixte sélectionné parmi BaTiO₃, SrTiO₃, BaZrO₃, CoFe₂O₄, NiFe₂O₄ et MnFe₂O₄ ou d'une solution solide d'oxydes mixtes sélectionnée parmi (Ba,Sr)TiO₃, Sr(Ti,Zr)O₃ et (Mn, Zn)Fe₂O₄ et ont un diamètre moyen de particule qui varie de 1 à 300 nm.
